# EUROPEAN PATENT APPLICATION

(11) **EP 4 329 408 A1**
(43) Date of publication of application: **28.02.2024**
(21) Application number: 22806622.1
(22) Date of filing: 06.05.2022
(51) Int. Cl.: H04W 72/04

(54) **COMMUNICATION METHOD AND APPARATUS**

(30) Priority: 14.05.2021 CN 202110528368
(71) Applicant: Huawei Technologies Co., Ltd., Shenzhen, Guangdong 518129 (CN)
(72) Inventor: LU, Yuxin, Shenzhen, Guangdong 518129 (CN); LIU, Chenchen, Shenzhen, Guangdong 518129 (CN); GAN, Ming, Shenzhen, Guangdong 518129 (CN)
(74) Representative: Gill Jennings & Every LLP
(86) International application number: PCT/CN2022/091288
(87) International publication number: WO 2022/237656

(57) **Abstract**

This application provides a communication method and apparatus, to obtain a link set/link sets to which a link/links belongs/belong, and may be applied to a Wi-Fi system. The method includes: generating, by a first multi-link device MLD, a first frame, and sending the first frame. The first frame includes a first field, the first field indicates a relationship between a first link and at least one link set, the first link is any one of at least one link established between the first MLD and a second MLD, and the link set includes one or more of the at least one link.

## Description

This application claims priority to Chinese Patent Application No. 202110528368.5, filed with the China National Intellectual Property Administration on May 14, 2021 and entitled "COMMUNICATION METHOD AND APPARATUS", which is incorporated herein by reference in its entirety.

### TECHNICAL FIELD

This application relates to the communication field, and in particular, to a communication method and apparatus.

### BACKGROUND

An enhanced multi-link operation may be performed between multi-link devices (multi-link device, MLD). For example, the enhanced multi-link operation includes an enhanced multi-link single-radio (enhanced multi-link single-radio, EMLSR) operation and an enhanced multi-link multi-radio (enhanced multi-link multi-radio, EMLMR) operation. In the EMI,SR operation, a station (station, STA) MLD may perform monitoring on a plurality of links, but may perform communication on only one link. In the EMLMR operation, the STA MLD may perform monitoring on the plurality of links, and may perform communication on the plurality of links.

For the STA MLD that supports the EMLMR operation, the EMLMR operation is applied to a link set. For example, it may be specified that a first link may initiate frame exchange, and another link in a link set to which the first link belongs cannot initiate frame exchange. However, in a conventional technology, which link set/link sets to which the first link belongs or which link set/link sets including the first link cannot be obtained. As a result, the foregoing specification cannot be performed, and the EMLMR operation cannot be successfully performed.

In other words, a corresponding solution is not provided in the industry for how to obtain which link/links belongs/belong to which link set/link sets.

### SUMMARY

Embodiments of this application provide a communication method and apparatus, to obtain which link set/link sets to which which link/links belongs/belong.

To achieve the foregoing objective, this application uses the following technical solutions.

According to a first aspect, a communication method is provided. The communication method includes: generating, by a first MLD, a first frame, and sending the first frame. The first frame includes a first field, the first field indicates a relationship between a first link and at least one link set, the first link is any one of at least one link established between the first MLD and a second MLD, and one link set includes one or more of the at least one link.

Based on the communication method according to the first aspect, the first MLD generates the first frame including the first field, and sends the first frame to the second MLD. The first field indicates a relationship between the first link and the at least one link set, the first link is any one of the at least one link established by the first MLD and the second MLD, and one link set includes one or more of the at least one link. In this way, the first frame flexibly indicates a relationship between one or more links and one or more link sets, so that the second MLD may determine, based on the first frame, a link set to which the first link belongs and a link included in the link set, and may obtain which link set/link sets to which which link/links belongs/belong, thereby successfully performing an EMLMR operation.

In a possible design manner, the first field may be carried in a Per-STA Profile field configured by each station of a multi-link element (Multi-Link element). In this way, a link set to which the first link belongs may be indicated at a link level, and a plurality of link sets to which the first link belongs may be indicated, so that which link set/link sets to which link/links belongs/belong may be obtained. Compared with a case that a link set is indicated at a multi-link device level, and only one link set exists may be indicated, the link set to which the first link belongs may be indicated at the link level more flexibly.

In a possible design manner, the first field may indicate whether the first link belongs to a first link set, and the at least one link set is the first link set. In this way, the link set to which a link belongs may be indicated at the link level, and may not be indicated when a link is not established. Each link may be indicated by using 1 bit.

In a possible design manner, the first field may indicate the link set to which the first link belongs. In this way, a link set to which each link belongs may be indicated at a link level, and link sets to which each link belongs may be different. Alternatively, a plurality of link sets to which the first link belongs may be indicated, and it is not limited to indicating one link set to which the first link belongs.

In a possible design manner, the first field may be a bitmap. In this way, it is convenient to indicate a plurality of link sets to which each link belongs at the link level, and the link sets to which each link belongs may be different. Alternatively, a plurality of link sets to which the first link belongs may be indicated, and it is not limited to indicating one link set to which the first link belongs. In addition, an effective length of the bitmap may be consistent with a number of link sets, to facilitate parsing by a receiving end (the second MLD). In particular, when the first link belongs to the plurality of link sets, parsing by the receiving end (for example, the second MLD) is more convenient.

In a possible design manner, the first frame may further include a second field, and the second field may indicate whether the first field exists. In this way, when the second field indicates that the first field does not exist, the receiving end may not need to parse the first field, thereby saving parsing time.

In a possible design manner, the second field may be carried in the Per-STA Profile field configured by each station of the multi-link element (Multi-Link element). The first field indicates operation information at the link level, and the second field indicating whether the first field exists may also be at the link level.

In a possible design manner, when the second field indicates that the first field does not exist, the second field may further indicate that the at least one link does not belong to any link set in the at least one link set. In this way, a definition explanation is added to a case that the second field indicates that the first field does not exist, so that a number of bits required for indicating all cases may be reduced.

In a possible design manner, the first frame may further include a third field, and the third field may indicate a number of at least one link set. In this way, a length or an effective length of the first field may be determined based on the number of link sets, to facilitate parsing by the receiving end (for example, the second MLD).

In a possible design manner, the third field may be carried in a common information Common Info field of the multi-link element (Multi-Link element). The number of link sets is information at a multi-link device level, and the third field may be set at the multi-link device level.

According to a second aspect, a communication method is provided. The communication method includes: receiving a first frame, and obtaining a relationship between a first link and at least one link set based on the first frame. The first frame includes a first field, the first field indicates a relationship between a first link and at least one link set, the first link is any one of at least one link established between the first MLD and a second MLD, and one link set includes one or more of the at least one link.

In a possible design manner, the first field may indicate whether the first link belongs to a first link set, and the at least one link set is the first link set.

In a possible design manner, the first field may indicate the link set to which the first link belongs.

In a possible design manner, the first field may be a bitmap.

In a possible design manner, the first frame may further include a second field, and the second field may indicate whether the first field exists.

In a possible design manner, the second field may be carried in the Per-STA Profile field configured by each station of the multi-link element (Multi-Link element).

In a possible design manner, when the second field indicates that the first field does not exist, the second field may further indicate that the at least one link does not belong to any link set in the at least one link set.

In a possible design manner, the first frame may further include a third field, and the third field may indicate a number of at least one link set.

In a possible design manner, the third field may be carried in a common information Common Info field of the multi-link element (Multi-Link element).

In a possible design manner, the first field may be carried in the Per-STA Profile field configured by each station of the multi-link element (Multi-Link element).

In addition, for a technical effect of the communication method according to the second aspect, refer to the technical effect of the communication method according to the first aspect. Details are not described herein again.

According to a third aspect, a communication apparatus is provided. The communication apparatus includes a processing module and a transceiver module.

The processing module is configured to generate a first frame. The transceiver module is configured to send the first frame. The first frame includes a first field, the first field indicates a relationship between a first link and at least one link set, the first link is any one of at least one link established between the first MLD and a second MLD, and one link set includes one or more of the at least one link.

In a possible design manner, the first field may indicate whether the first link belongs to a first link set, and the at least one link set is the first link set.

In a possible design manner, the first field may indicate the link set to which the first link belongs.

In a possible design manner, the first field may be a bitmap.

In a possible design manner, the first frame may further include a second field, and the second field may indicate whether the first field exists.

In a possible design manner, the second field may be carried in the Per-STA Profile field configured by each station of the multi-link element (Multi-Link element).

In a possible design manner, when the second field indicates that the first field does not exist, the second field may further indicate that the at least one link does not belong to any link set in the at least one link set.

In a possible design manner, the first frame may further include a third field, and the third field may indicate a number of at least one link set.

In a possible design manner, the third field may be carried in a common information Common Info field of the multi-link element (Multi-Link element).

In a possible design manner, the first field may be carried in a Per-STA Profile field that is configured for each station and that is of a multi-link element (Multi-Link element).

It should be noted that the transceiver module in the third aspect may include a receiving module and a sending module. The receiving module is configured to receive data and/or signaling from the second MLD; and the sending module is configured to send data and/or signaling to the second MLD. A specific implementation of the transceiver module is not specifically limited in this application.

Optionally, the communication apparatus in the third aspect may further include a storage module. The storage module stores a program or instructions. When the processing module executes the program or the instructions, the communication apparatus in the third aspect is enabled to perform the method in the first aspect.

It should be noted that the communication apparatus in the third aspect may be the first MLD, or may be a chip (system) or another component or component that may be disposed in the first MLD. This is not limited in this application.

In addition, for a technical effect of the communication apparatus in the third aspect, refer to the technical effect of the communication method in any possible implementation of the first aspect. Details are not described herein again.

According to a fourth aspect, a communication apparatus is provided. The communication apparatus includes a processing module and a transceiver module. The transceiver module is configured to receive a first frame. The processing module is configured to obtain a relationship between a first link and at least one link set based on the first frame. The first frame includes a first field, the first field indicates a relationship between a first link and at least one link set, the first link is any one of at least one link established between the first MLD and a second MLD, and one link set includes one or more of the at least one link.

In a possible design manner, the first field may indicate whether the first link belongs to a first link set, and the at least one link set is the first link set.

In a possible design manner, the first field may indicate the link set to which the first link belongs.

In a possible design manner, the first field may be a bitmap.

In a possible design manner, the first frame may further include a second field, and the second field may indicate whether the first field exists.

In a possible design manner, the second field may be carried in the Per-STA Profile field that is configured for each station and that is of the multi-link element (Multi-Link element).

In a possible design manner, when the second field indicates that the first field does not exist, the second field may further indicate that the at least one link does not belong to any link set in the at least one link set.

In a possible design manner, the first frame may further include a third field, and the third field may indicate a number of at least one link set.

In a possible design manner, the third field may be carried in a common information Common Info field of the multi-link element (Multi-Link element).

In a possible design manner, the first field may be carried in the Per-STA Profile field configured by each station of the multi-link element (Multi-Link element).

It should be noted that the transceiver module in the fourth aspect may include a receiving module and a sending module. The receiving module is configured to receive data and/or signaling from the first MLD; and the sending module is configured to send data and/or signaling to the first MLD. A specific implementation of the transceiver module is not specifically limited in this application.

Optionally, the communication apparatus in the fourth aspect may further include a storage module. The storage module stores a program or instructions. When the processing module executes the program or the instructions, the communication apparatus in the fourth aspect is enabled to perform the method in the second aspect.

It should be noted that the communication apparatus in the fourth aspect may be the second MLD, or may be a chip (system) or another component or component that may be disposed in the second MLD. This is not limited in this application.

In addition, for a technical effect of the communication apparatus in the fourth aspect, refer to the technical effect of the communication method in any possible implementation of the second aspect. Details are not described herein again.

According to a fifth aspect, a communication apparatus is provided. The communication apparatus includes a processor. The processor is coupled to a memory, and the memory is configured to store a computer program.

The processor is configured to execute the computer program stored in the memory, to enable the communication method in any possible implementation in the first aspect and the second aspect to be performed.

In a possible design, the communication apparatus in the fifth aspect may further include a transceiver. The transceiver may be a transceiver circuit or an input/output port. The transceiver may be used by the communication apparatus to communicate with another device.

It should be noted that the input port may be configured to implement receiving functions involved in the first aspect and the second aspect, and the output port may be configured to implement sending functions involved in the first aspect and the second aspect.

In this application, the communication apparatus according to the fifth aspect may be the first MLD or the second MLD, or a chip or a chip system disposed in the first MLD or the second MLD.

In addition, for a technical effect of the communication apparatus in the fifth aspect, refer to a technical effect of the communication method in any implementation of the first aspect and the second aspect. Details are not described herein again.

According to a sixth aspect, a communication system is provided. The communication system includes the communication apparatus according to the third aspect and the communication apparatus according to the fourth aspect. Alternatively, the communication system includes the communication apparatus according to the fifth aspect configured to implement the method according to the first aspect and the communication apparatus according to the fifth aspect configured to implement the method according to the second aspect. For example, the communication system includes a first MLD and a second MLD.

According to a seventh aspect, a chip system is provided. The chip system includes a logic circuit and an input/output port. The logic circuit is configured to implement processing functions involved in the first aspect and the second aspect, and the input/output port is configured to implement receiving and sending functions involved in the first aspect and the second aspect. Specifically, the input port may be configured to implement receiving functions involved in the first aspect and the second aspect, and the output port may be configured to implement sending functions involved in the first aspect and the second aspect.

In a possible design, the chip system further includes a memory. The memory is configured to store program instructions and data that implement functions in the first aspect and the second aspect.

The chip system may include a chip, or may include a chip and another discrete component.

According to an eighth aspect, a computer-readable storage medium is provided, including a computer program or instructions. When the computer program or the instructions runs/run on a computer, the communication method according to any possible implementation of the first aspect and the second aspect is performed.

According to a ninth aspect, a computer program product is provided, including a computer program or instructions. When the computer program or the instructions runs/run on a computer, the communication method according to any possible implementation of the first aspect and the second aspect is performed.

### BRIEF DESCRIPTION OF DRAWINGS

FIG. 1 is a schematic diagram of an architecture of a communication system according to an embodiment of this application;
FIG. 2 is a schematic diagram of a structure of a first MLD and a second MLD according to an embodiment of this application;
FIG. 3 and FIG. 4 are schematic diagrams of structures of an AP MLD and a STA MLD according to an embodiment of this application;
FIG. 5 is a schematic diagram of communication between a multi-link device and another device according to an embodiment of this application;
FIG. 6A and FIG. 6B are schematic diagrams of a frame structure of a basic variant multi-link element according to an embodiment of this application;
FIG. 7 is a schematic flowchart of a communication method according to an embodiment of this application;
FIG. 8 is a schematic diagram of a frame structure of a STA Info field according to an embodiment of this application;
FIG. 9 is a schematic diagram of a frame structure of a STA Control field according to an embodiment of this application;
FIG. 10 is a schematic diagram of a frame structure of another STAInfo field according to an embodiment of this application;
FIG. 11 is a schematic diagram of a frame structure of another STA Control field according to an embodiment of this application;
FIG. 12 is a schematic diagram of still another frame structure of a STA Info field according to an embodiment of this application;
FIG. 13 is a schematic diagram of still another frame structure of a STA Control field according to an embodiment of this application;
FIG. 14 is a schematic diagram of still another frame structure of a STA Control field according to an embodiment of this application;
FIG. 15 is a schematic diagram of still another frame structure of a STA Control field according to an embodiment of this application;
FIG. 16 is a schematic diagram of a frame structure of a Common Info field according to an embodiment of this application;
FIG. 17 is a schematic diagram of a structure of a communication apparatus according to an embodiment of this application; and
FIG. 18 is a schematic diagram of a structure of another communication apparatus according to an embodiment of this application.

### DESCRIPTION OF EMBODIMENTS

The following describes technical solutions of this application with reference to accompanying drawings.

The technical solutions in embodiments of this application may be applied to various communication systems, for example, a wireless local area network (wireless local area network, WLAN), a wireless fidelity (wireless fidelity, Wi-Fi) system, a vehicle to everything (vehicle to everything, V2X) communication system, a device-to-device (device-to-device, D2D) communication system, an internet of vehicles communication system, a 4th generation (4th generation, 4G) mobile communication system, such as a long term evolution (long term evolution, LTE) system, a worldwide interoperability for microwave access (worldwide interoperability for microwave access, WiMAX) communication system, and a 5th generation (5th generation, 5G) mobile communication system, such as a new radio (new radio, NR) system, a future communication system, such as a 6th generation (6th generation, 6G) mobile communication system, and the like.

In descriptions of this application, unless otherwise specified, "/" means "or". For example, A/B may indicate A or B. A term "and/or" in this specification describes only an association relationship between associated objects and indicates that there may be three relationships. For example, A and/or B may represent the following three cases: Only A exists, both A and B exist, and only B exists. In addition, "at least one" means one or more, and "a plurality of" means two or more. Terms such as "first" and "second" do not limit a quantity and an execution sequence, and the terms such as "first" and "second" do not indicate a definite difference.

All aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In addition, in embodiments of this application, terms such as "example" and "for example" are used to represent giving an example, an illustration, or a description. Any embodiment or design scheme described as an "example" in this application should not be explained as being more preferred or having more advantages than another embodiment or design scheme. Exactly, the term "example" is used to present a concept in a specific manner.

The network architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

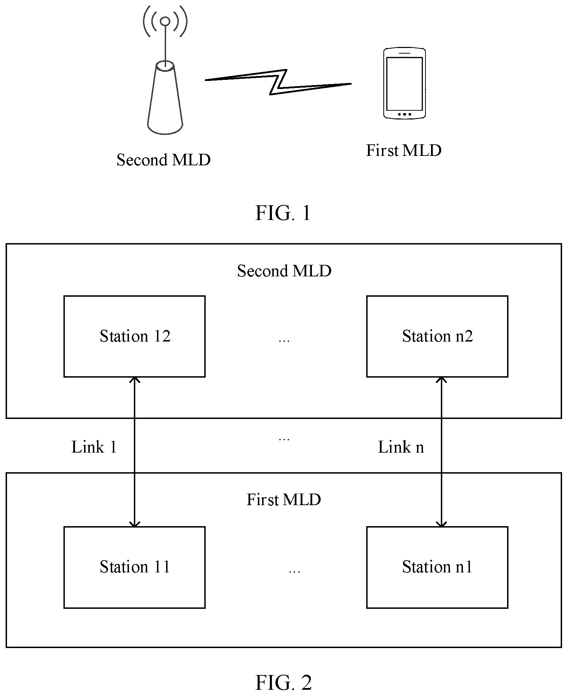

For ease of understanding embodiments of this application, a communication system shown in FIG. 1 is first used as an example to describe in detail a communication system applicable to embodiments of this application. For example, FIG. 1 is a schematic diagram of an architecture of a communication system to which a communication method according to an embodiment of this application is applicable.

As shown in FIG. 1, the communication system includes a first MLD and a second MLD. A number of first MLDs may be one or more, and a number of second MLDs may be one or more.

The first MLD is a device that accesses the communication system and has a wireless transceiver function, or a chip or a chip system that may be disposed in the terminal. The first MLD may also be referred to as a terminal device, user equipment (User Equipment, UE), a user apparatus, an access terminal, a subscriber unit, a subscriber station, a mobile station, a mobile station (mobile station, MS), a remote station, a remote terminal, a mobile device, a user terminal, a terminal, a terminal unit, a terminal station, a terminal apparatus, a wireless communication device, a user agent, or a user apparatus. The first MLD may communicate with an access point (access point, AP) MLD or another STA MLD or a single-link device. For example, the first MLD may be any communication device that may communicate with the access point (access point, AP) and communicate with a WLAN. Optionally, the first MLD may be a multi-link device supporting 802.11 series protocols.

For example, the first MLD in embodiments of this application may be a mobile phone (mobile phone), a wireless data card, a personal digital assistant (personal digital assistant, PDA) computer, a laptop computer (laptop computer), a tablet computer (Pad), an ultra-mobile personal computer (ultra-mobile personal computer, UMPC), a netbook, a computer with a wireless transceiver function, a machine type communication (machine type communication, MTC) terminal, a virtual reality (virtual reality, VR) terminal device, an augmented reality (augmented reality, AR) terminal device, an internet of things (internet of things, IoT) terminal device, a wireless terminal in industrial control (industrial control), a wireless terminal in self-driving (self-driving), a wireless terminal in remote medical (remote medical), a wireless terminal in a smart grid (smart grid), a wireless terminal in transportation safety (transportation safety), a wireless terminal in a smart city (smart city) (such as smart water meter, a smart meter, and a smart air detection node), a wireless terminal in a smart home (smart home) (for example, a game console, a projector, a smart camera, a smart television, a smart speaker, a smart refrigerator, and fitness equipment), a vehicle-mounted terminal, and an RSU having a terminal function. The access terminal may be a cellular phone (cellular phone), a cordless phone, a session initiation protocol (session initiation protocol, SIP) phone, a wireless local loop (wireless local loop, WLL) station, a personal digital assistant (personal digital assistant, PDA), a handset (handset) having a wireless communication function, a computing device, another processing device connected to a wireless modem, a wearable device, or the like.

For another example, the first MLD in embodiments of this application may be an express delivery terminal (for example, a device that can monitor a vehicle location of goods, a device that can monitor temperature and humidity of goods, or the like) in smart logistics, a wireless terminal in smart agriculture (for example, a wearable device that can collect related data of poultry and animals, or the like), a wireless terminal in smart buildings (for example, a smart elevator, a fire monitoring device, a smart meter, or the like), a wireless terminal in smart medical (for example, a wearable device that can monitor a physiological state of people or animals, or the like), a wireless terminal in smart transportation (for example, a smart bus, a smart vehicle, a shared bicycle, a charging pile monitoring device, a smart traffic light, a smart monitoring and parking device, or the like), a wireless terminal in smart retail (for example, a vending machine, a self-service checkout machine, a self-service navigation console of an unmanned convenience store, a self-service dining machine, a shopping mall, or the like), and a wireless terminal (such as a printer, a projector, or the like) in a smart office. For another example, the first MLD in this application may be a vehicle-mounted module, a vehicle-mounted assembly, a vehicle-mounted component, a vehicle-mounted chip, or a vehicle-mounted unit that is built in a vehicle as one or more components or units. The vehicle may implement the method in this application through the vehicle-mounted module, the vehicle-mounted module, the vehicle-mounted component, the vehicle-mounted chip, or the vehicle-mounted unit that is built in the vehicle.

The second MLD may be a device that is located on a network side of the communication system and has a wireless transceiver function, or a chip or a chip system that may be disposed in the device, and may provide a wireless communication function for the first MLD. The AP MLD includes but is not limited to: an access point (access point, AP) in a wireless fidelity (wireless fidelity, Wi-Fi) system, such as a home gateway, a router, a server, a switch, and a bridge, an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a wireless relay node, a wireless backhaul node, a transmission and reception point (transmission and reception point, TRP; or transmission point, TP), or the like. The AP MLD may alternatively be a gNB or a transmission and reception point (TRP or TP) in a 5G system, for example, a new radio (new radio, NR) system, or one antenna panel or a group of antenna panels (including a plurality of antenna panels) of a base station in a 5G system. The AP MLD may alternatively be a network node, such as a baseband unit (BBU), a distributed unit (distributed unit, DU), or a road side unit (road side unit, RSU) having a base station function, that constitutes a gNB or a transmission and reception point. Optionally, the second MLD may be a multi-link device supporting 802.11 series protocols.

It should be noted that the communication method provided in embodiments of this application is applicable to any two nodes shown in FIG. 1. For specific implementation, refer to the following method embodiments. Details are not described herein again.

It should be noted that, the solutions in embodiments of this application may also be used in another communication system, and a corresponding name may also be replaced with a name of a corresponding function in the another communication system. In addition, a person of ordinary skill in the art may learn that the technical solutions provided in embodiments of this application are also applicable to a similar technical problem as a network architecture evolves and a new service scenario emerges.

It should be understood that FIG. 1 is merely a simplified schematic diagram of an example for ease of understanding. The communication system may further include another device not drawn in FIG. 1.

To make embodiments of this application clearer, the following uniformly describes some content and concepts related to embodiments of this application.

### 1. Multi-link device MLD

The multi-link device MLD is also referred to as a multi-band device (multi-band device). For example, the multi-link device MLD may implement wireless communication in compliance with institute of electrical and electronics engineers (institute of electrical and electronics engineers, IEEE) 802.11 series standards. For example, communication with another device is implemented by complying with an extremely high throughput (extremely high throughput, EHT), or complying with IEEE 802.11be or compatible with IEEE 802.11be. Certainly, the another device may be the multi-link device, or may not be the multi-link device, for example, a single-link device. The 802.11 series protocols may include but are not limited to: IEEE 802.11be, IEEE 802.11 ax, IEEE 802.11a/b/g/n/ac, a next-generation standard IEEE 802.11be, and standard evolution that may occur in the future.

For example, a band on which the multi-link device operates may include but is not limited to: sub 1 GHz (sub 1 GHz), 2.4 GHz, 5 GHz, 6 GHz, and a high frequency of 60 GHz. The MLD may perform communication in a plurality of channels on the same band. The plurality of bands or the plurality of channels may be collectively referred to as a multi-link. Apeak throughput may be increased in a multi-link communication manner, a service transmission delay is reduced, and a rate of communication between MLDs is increased.

FIG. 2 is a schematic diagram of a structure of a first MLD and a second MLD according to an embodiment of this application.

A multi-link device may include one or more affiliated stations. As shown in FIG. 2, the first MLD includes a station 11 to a station n1, and the second MLD includes a station 12 to a station n2. The first MLD communicates with the second MLD through a link 1 to a link n, where n is an integer greater than 1. One end of the link 1 is connected to the station 11 of the first MLD, and the other end of the link 1 is connected to the station 12 of the second MLD. Similarly, one end of the link n is connected to the station n1 of the first MLD, and the other end of the link n is connected to the station n2 of the second MLD.

The affiliated station is a logical station, and "a multi-link device includes an affiliated station" is also briefly described as "a multi-link device includes a station" in embodiments of this application. The affiliated station may be an AP or a non-access point station (non-access point station, non-AP STA). In embodiments of this application, the first MLD in the communication system shown in FIG. 1 may be a multi-link device whose affiliated station is the non-AP STA, and the second MLD in the communication system shown in FIG. 1 may be a multi-link device whose affiliated station is the AP.

For ease of description, in this application, the multi-link device whose affiliated station is the AP is referred to as an AP MLD, a multi-link AP, a multi-link AP device, or an access point AP. The multi-link device whose affiliated station is the non-AP STA is referred to as a STA MLD, a multi-link STA, a multi-link STA device, a STA MLD, or the like.

In some embodiments, before data transmission, two multi-link devices (for example, the AP MLD or the STA MLD) may first negotiate or communicate a correspondence between a link identifier (link ID) and one link or a station on one link, or the AP MLD broadcasts a management frame. For example, a beacon frame indicates a correspondence between a link identifier and one link or a station on one link. Therefore, during data transmission, the link identifier needs to be carried, and a large amount of signaling information does not need to be transmitted to indicate the link or the station on the link. This may reduce signaling overheads and improve transmission efficiency.

It should be noted that the communication method provided in embodiments of this application may be applied to the following scenarios: a scenario (as shown in FIG. 1) in which a first MLD is a STA MLD and a second MLD is an AP MLD; a scenario in which a first MLD is a STA MLD and a second MLD is a STA MLD; a scenario in which a first MLD is an AP MLD and a second MLD is a STA MLD; and a scenario in which a first MLD is an AP MLD and a second MLD is an AP MLD.

### 2. STA MLD and AP MLD

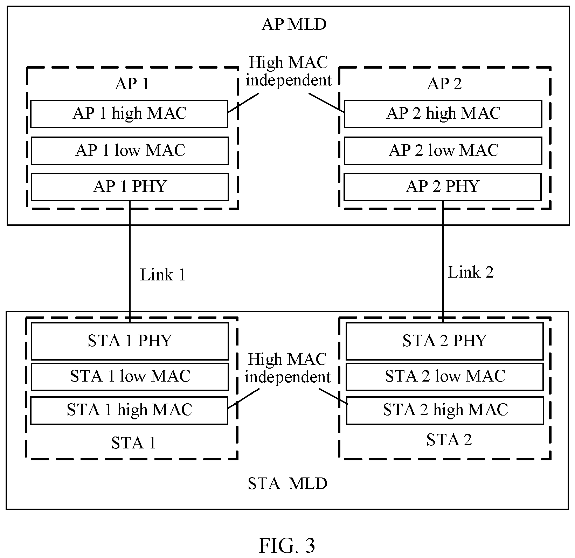

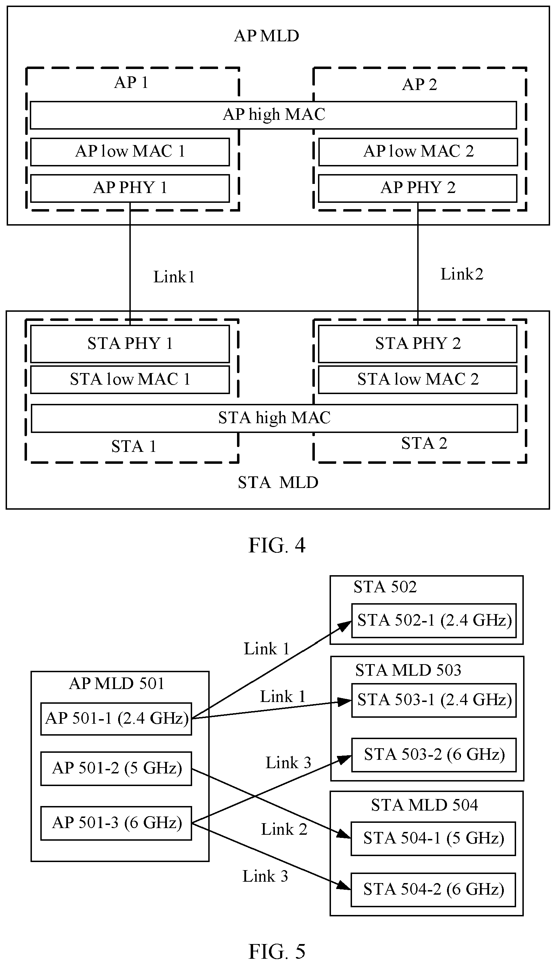

FIG. 3 and FIG. 4 are schematic diagrams of structures of an AP MLD and a STA MLD according to an embodiment of this application. An example in which both the AP MLD and the STA MLD include two stations is used for description. An 802.11 standard focuses on an 802.11 physical layer (physical layer, PHY) and a media access control (media access control, MAC) layer in the AP MLD and the STA MLD.

As shown in FIG. 3, the AP MLD includes an affiliated AP 1 and an affiliated AP 2. The AP 1 and the AP 2 are independent of each other at a low (low) MAC layer and a PHY layer, and are also independent of each other at a high (high) MAC layer. The STA MLD includes an affiliated STA 1 and an affiliated STA 2. The STA 1 and the STA 2 are independent of each other at the low MAC layer and the PHY layer, and are also independent of each other at the high MAC layer.

As shown in FIG. 4, the AP MLD includes an affiliated AP 1 and an affiliated AP 2. The AP 1 and the AP 2 are independent of each other at the low MAC layer and the PHY layer, and share the high MAC layer. The STA MLD includes an affiliated STA 1 and an affiliated STA 2. The STA 1 and the STA 2 are independent of each other at the low MAC layer and the PHY layer, and share the high MAC layer.

As shown in FIG. 3 or FIG. 4, an AP MLD and a STA MLD may communicate with each other through a link 1 and a link 2. One end of the link 1 is connected to an AP 1 of the AP MLD, and the other end of the link 1 is connected to a STA 1 of the STA MLD. One end of the link 2 is connected to an AP 2 of the AP MLD, and the other end of the link 2 is connected to a STA 2 of the STA MLD.

Certainly, the STA MLD may use a structure in which high MAC layers are independent of each other, and the AP MLD uses a structure in which the high MAC layer is shared. Alternatively, the STA MLD may use a structure in which a high MAC layer is shared, and the AP MLD may use a structure in which high MAC layers are independent of each other. For example, the high MAC layer or the low MAC layer may be implemented by one processor in a chip system of the multi-link device, or may be implemented by different processing modules in a chip system.

For example, the multi-link device in embodiments of this application may be a single-antenna device, or may be a multi-antenna device. For example, the multi-link device may be a device with more than two antennas. A number of antennas included in the multi-link device is not limited in embodiments of this application. In embodiments of this application, the multi-link device may allow traffic of a same access type to be transmitted on different links, or even allow same data packets to be transmitted on different links. Alternatively, the multi-link device may not allow traffic of a same access type to be transmitted on different links, but may allow traffic of different access types to be transmitted on different links.

FIG. 5 is a schematic diagram of communication between a multi-link device and another device according to an embodiment of this application.

As shown in FIG. 5, an AP MLD 501 communicates with a STA 502, a STA MLD 503, and a STA MLD 504. The AP MLD 501 includes an affiliated AP 501-1 to an affiliated AP 501-3. The STA MLD 503 includes an affiliated STA 503-1 and an affiliated STA 503-2. The STA MLD 504 includes an affiliated STA 504-1 and an affiliated STA 504-2. The STA 502 is a single-link device. The AP MLD may communicate with the STA MLD 503 by using a link 1 and a link 3, may communicate with the STAMLD 504 by using a link 2 and the link 3, and may communicate with the STA 502 by using the link 1.

The STA 502 operates on a band of 2.4 GHz. The STA 503-1 operates on the band of 2.4 GHz, and the STA 503-2 operates on a band of 6 GHz. The STA 504-1 operates on a band of 5 GHz, and the STA 504-2 operates on the band of 6 GHz. The AP 501-1 that is in the AP MLD and that operates on the band of 2.4 GHz may communicate, through the link 1, with the STA 502 and the STA 503-1 in the STA MLD 503. The AP 501-2 that is in the AP MLD and that operates on the band of 5 GHz may communicate, through the link 2, with the STA 504-1 that is in the STA MLD 504 and that operates on the band of 5 GHz. The AP 501-3 that is in the AP MLD 501 and that operates on the band of 6 GHz may communicate, through the link 3, with the STA 503-2 that is in the STA MLD 503 and that operates on the band of 6 GHz, and may further communicate, through the link 3, with the STA 504-2 in the STAMLD 504.

It should be noted that FIG. 5 is illustrated by using only an example in which the AP MLD supports three bands (2.4 GHz, 5 GHz, and 6 GHz), each band corresponds to one link, and the AP MLD 501 may operate on one or more links in the link 1, the link 2, or the link 3. On an AP side or a STA side, a link may be understood as a station operating on the link. In actual application, the AP MLD and the STA MLD may further support more or fewer bands. In other words, the AP MLD and the STA MLD may operate on more links or fewer links. This is not limited in embodiments of this application.

### 3. Multi-link (multi-link, ML)

For example, a multi-link device has a capability of sending and receiving on a multi-band (multi-band). The multi-band may include but is not limited to: a band of 2.4 GHz, a band of 5 GHz, and a band of 6 GHz. Access and transmission performed on each band are referred to as one link, and access and transmission performed on a plurality of bands are referred to as the multi-link.

In this way, a greater bandwidth may be used for data transmission. This significantly improves a throughput rate and improves robustness.

### 4. Receiving link and sending link

A common point between an EMLSR operation and an EMLMR operation lies in that: when monitoring (for example, monitoring information or a frame that needs to be monitored, such as a beacon frame), a number of receiving channels is A; and when data is transmitted, a number of receiving channels is B, where B>A, and one link may be associated with one or more channels (the channels include a receiving channel and a sending channel). A set of links (a set of links, or a link set) to which the EMLMR operation is applied may be referred to as an EMLMR link set (an EMLMR link, or an EMLMR link set). In embodiments of this application, the EMLMR link set is referred to as a link set for short.

Receiving link: When a link in the EMLMR link set receives one frame, such as a request to send (request to send, RTS) frame, that requests the link to perform a receiving operation, the link is referred to as a receiving link. Other links in the EMLMR link set may (according to some rules, for example, frame exchange is not performed on the other links in this case) switch their respective receiving channels to the receiving link, to perform a subsequent receiving operation.

Sending link: When a link in the EMLMR link set receives a frame, such as a clear to send (clear to send, CTS) frame, that requires the link to perform a sending operation, the link is referred to as a sending link. Other links in the EMLMR link set may (according to some rules, for example, frame exchange is not performed on the other links in this case) switch their respective sending channels to the sending link, to perform a subsequent sending operation.

5. A frame structure of a basic variant multi-link element (Basic variant Multi-Link element)

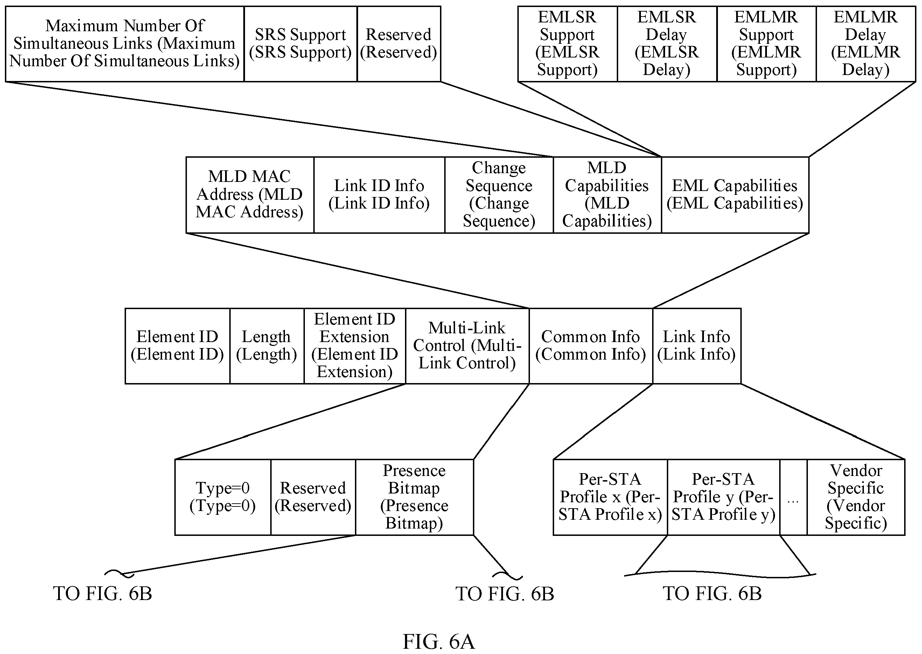

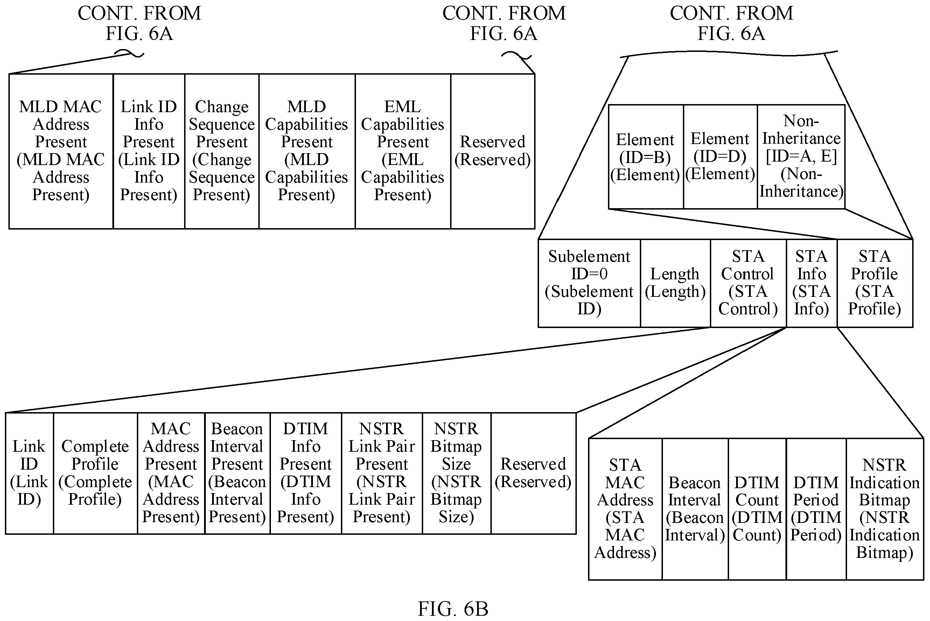

FIG. 6A and FIG. 6B are schematic diagrams of a frame structure of a basic variant multi-link element according to an embodiment of this application.

As shown in FIG. 6A and FIG. 6B, the basic variant multi-link element may include but is not limited to one or more of the following fields: an Element ID (Element ID) field, a Length (Length) field, an Element ID Extension (Element ID Extension) field, a Multi-Link Control (Multi-Link Control) field, a Common Info (Common Info) field, and a Link info (Link info) field. The Element ID field and the Element ID Extension field may identify the basic variant multi-link element, and settings of the Element ID field and the Element ID Extension field may be uniquely determined to distinguish from other elements. For example, the Element ID field may be set to 255, and the Element ID Extension field may be set to one value that is not used by another element. The Length field may indicate a length of the basic variant multi-link element.

The Multi-Link Control field may include but is not limited to one or more of the following fields: a Type (Type) field, a Reserved (Reserved) field, and one or more present (present) fields. A plurality of present fields may be further collectively referred to as a Presence Bitmap (Presence Bitmap) field. For the Basic variant Multi-Link element, the Type field may be set to 0.

For example, the Presence Bitmap field may include but is not limited to one or more of the following fields: an MLD MAC Address Present (MLD MAC Address Present) field, a Link ID Info Present (Link ID Info Present) field, a Change Sequence Present (Change Sequence Present) field, an MLD Capabilities Present (MLD Capabilities Present) field, an EML Capabilities Present (EML Capabilities Present) field, and a Reserved (Reserved) field. These present fields may respectively indicate whether a field in the Common Info field exists. For example, if the Present field is set to 1, it indicates that a corresponding field exists. If the Present field is set to 0, it indicates that a corresponding field does not exist.

For example, the Common Info field may include but is not limited to one or more of the following fields: an MLD MAC Address (MLD MAC Address) field, a Link ID Info (Link ID Info) field, a Change (change) Sequence (Change Sequence) field, an MLD Capabilities (MLD Capabilities) field, and an EML Capabilities (EML Capabilities) field.

The MLD Capabilities field may include but is not limited to one or more of the following fields: a Maximum Number Of Simultaneous Links (Maximum Number Of Simultaneous Links) field, a Single response scheduling (Single response scheduling, SRS) Support (Support) field, and a Reserved (Reserved) field.

The EML Capabilities field may include but is not limited to one or more of the following fields: an EMI,SR Support (EMLSR Support) field, an EMI,SR Delay (EMLSR Delay) field, an EMLMR Support (EMLMR Support) field, and an EMLMR Delay (EMLMR Delay) field.

For example, the Link Info field may include but is not limited to one or more of the following fields (or sub-elements): zero or more Per-STA Profile (Per-STA Profile) sub-elements. Optionally, the Link Info field may further include a Vendor Specific (specified) (Vendor Specific) field (or a sub-element).

For example, the Per-STA Profile sub-element may include but is not limited to one or more of the following fields: a Subelement ID (Subelement ID) field, a Length (Length) field, a STA Control (STA Control) field, a STA Info (STA Info) field, and a STA Profile (STA Profile) field. The Subelement ID field may identify the Per-STA Profile sub-element. The Subelement ID field of the Per-STA Profile sub-element may be set to 0. The Length field may indicate a length of the Per-STA Profile sub-element.

The STA Control field may include but is not limited to one or more of the following fields (or sub-fields): a Link ID (Link ID) field, a Complete Profile (Complete Profile) field, a MAC Address Present (MAC Address Present) field, a Beacon Interval Present (Beacon Interval Present) field, a delivery traffic indication map (delivery traffic indication map, DTIM) Info Present (Info Present) field, a non-simultaneous transmit and receive (non-simultaneous transmit and receive, NSTR) Link Pair Present (Link Pair Present) field, and an NSTR Bitmap Size (NSTR Bitmap Size) field.

The Link ID field may identify a corresponding link. The Complete Profile field may indicate whether the Basic variant Multi-Link element includes complete information for the link. The MAC Address Present, the Beacon Interval Present, and the NSTR Link Pair Present may respectively indicate whether a STA MAC Address (STA MAC Address) field, a Beacon Interval (Beacon Interval) field, and an NSTR Indication Bitmap (NSTR Indication Bitmap) field exist in the STA Info field. The DTIM Info Present field may indicate whether a DTIM Count (DTIM Count) and a DTIM Period (DTIM Period) exist in the STA Info field. The NSTR Bitmap Size field may indicate whether a length of the NSTR Indication Bitmap field is 8 bits or 16 bits when the NSTR Indication Bitmap field exists in the STA Info field.

Optionally, the STA Profile field may include zero or more elements (Element).

It should be noted that a frame format of the basic variant multi-link element is not limited to a frame format shown in FIG. 6A and FIG. 6B. A specific format of the basic variant multi-link element is not limited in this application.

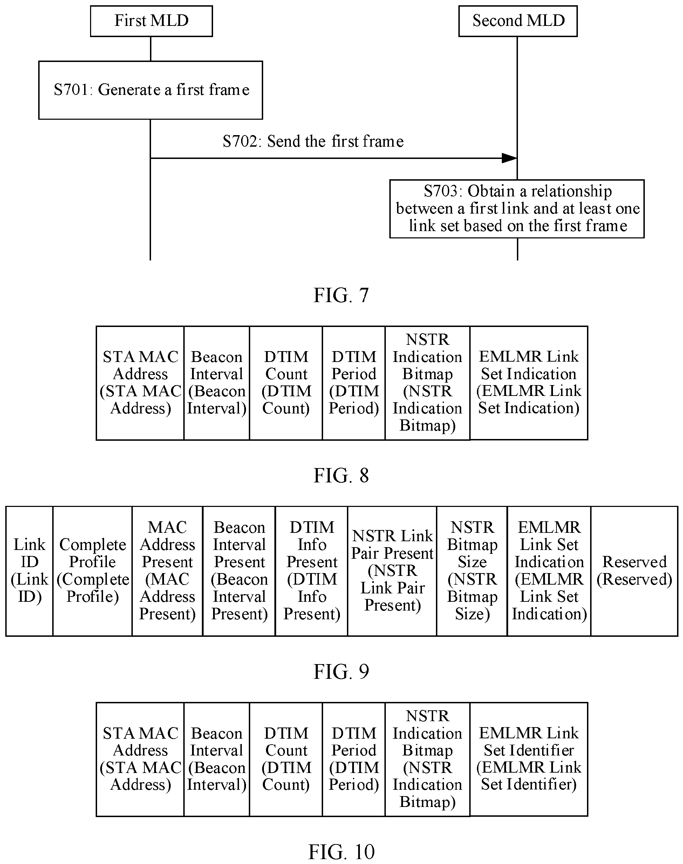

The following describes in detail the communication method provided in embodiments of this application with reference to FIG. 7 to FIG. 16.

For example, FIG. 7 is a schematic flowchart of a communication method according to an embodiment of this application. The communication method is applicable to communication between any two nodes shown in FIG. 1.

As shown in FIG. 7, the communication method includes the following steps.

S701: A first MLD generates a first frame.

For example, the first frame includes a first field, and the first field indicates a relationship between a first link and at least one link set. The first link is any one of at least one link established by the first MLD and a second MLD, and one link set includes one or more of the at least one link.

With reference to FIG. 2, n=3 is used as an example. Links established between the first MLD and the second MLD include a link 1, a link 2, and a link 3. It is assumed that the at least one link set includes a link set 1 and a link set 2. The first link is the link 1, and the first field may indicate a relationship between the link 1 and the link set 1 and the link set 2. The first link is the link 2, and the first field may indicate a relationship between the link 2 and the link set 1 and the link set 2. The first link is the link 3, and the first field may indicate a relationship between the link 3 and the link set 1 and the link set 2.

For example, the relationship between the first link and the link set may include that the first link belongs to the link set and that the first link does not belong to the link set.

For example, the link set may be referred to as an EMLMR link set (EMLMR link set). This is not limited in embodiments of this application.

Optionally, the first frame includes information that indicates a relationship between at least one link between the first MLD and the second MLD and the at least one link set, and the at least one link includes the first link. For example, the first frame includes information that indicates a relationship between the link 1, the link 2, and the link 3 and the link set 1 and the link set 2.

It should be noted that a number of links between the first MLD and the second MLD and a number of link sets in the at least one link set are not limited in embodiments of this application.

In a possible design manner, the first field may indicate whether the first link belongs to the first link set.

Optionally, the at least one link set is the first link set.

For example, a number of at least one link set is one, and the first field may indicate that the first link belongs to or does not belong to the first link set.

For example, if the first field is set to 0, it indicates that the first link does not belong to the first link set; and if the first field is set to 1, it indicates that the first link belongs to the first link set. Alternatively, if the first field is set to 1, it indicates that the first link does not belong to the first link set; and if the first field is set to 0, it indicates that the first link belongs to the first link set.

It should be noted that in embodiments of this application, an example in which the first field is set to 0, representing that the first link does not belong to the first link set; and the first field is set to 1, representing that the first link belongs to the first link set is used for description.

With reference to FIG. 2, n=3 is used as an example. Links between the first MLD and the second MLD include a link 1, a link 2, and a link 3. It is assumed that the at least one link set is a link set 1, and for the link 1, the first field is set to 1; for the link 2, the first field is set to 0; and for the link 3, the first field is set to 1. In other words, the first field indicates that the link 1 belongs to the link set 1, the link 2 does not belong to the link set 1, and the link 3 belongs to the link set 1. The first field indicates that the link set 1 includes the link 1 and the link 3, and the link set 1 does not include the link 2.

In a possible design manner, the first field may indicate the link set to which the first link belongs.

Optionally, the at least one link may include the first link.

In some embodiments, the first field may indicate an index or an identifier of a link set to which the first link belongs.

For example, the link set to which the first link belongs is indicated in at least the following manner 1 to manner 4.

Manner 1: With reference to Table 1, an example in which a quantity of at least one link set is one (for example, the link set 1). The first field may occupy 1 bit, and the first field is set to 0, representing that the first link does not belong to the link set 1 (equivalent to that the link set 1 does not include the first link). When the first field is set to 1, it indicates that the first link belongs to the link set 1, or belongs to a link set whose index or identifier is 1 (equivalent to that the link set 1 includes the first link). This is used as an example for description in embodiments of this application.

Alternatively, if the first field is set to 0, it indicates that the first link belongs to the link set 1. When the first field is set to 1, it indicates that the first link does not belong to the link set 1. This is not limited in embodiments of this application.

**Table 1**

| First field | Definition |
|---|---|
| 0 | Not belong to a link set 1 |
| 1 | Belong to a link set 1 |

It should be noted that a number of bits occupied by the first field is not limited in embodiments of this application. For example, 3 bits may be occupied. When the first field is set to 000, it indicates that the first field does not belong to the link set 1, and when the first field is set to 001, it indicates that the first field belongs to the link set 1. For another example, 8 bits may be occupied. When the first field is set to 00000000, it indicates that the first field does not belong to the link set 1, and when the first field is set to 00000001, it indicates that the first field belongs to the link set 1. In addition, definitions of values of the first field are not limited in embodiments of this application, so that the link set to which the first link belongs may be indicated.

In this way, when a number of at least one link set is one, the first field may be determined in the manner shown in the manner 1.

Manner 2: With reference to Table 2-1, when a number of at least one link set is more than one and the first link does not simultaneously belong to a plurality of link sets (or the first link belongs to one link set), an example in which a number of at least one link set is two (for example, the link set 1 and the link set 2) is used. It is assumed that the first field occupies 2 bits, and the first field is set to 00, it indicates that the first link does not belong to any link set in the at least one link set or does not belong to any link set (equivalent to that any link set does not include the first link). When the first field is set to 01, it indicates that the first link belongs to the link set 1, or belongs to a link set whose index or identifier is 1 (equivalent to that the link set 1 includes the first link). When the first field is set to 10, it indicates that the first link belongs to the link set 2, or belongs to a link set whose index or identifier is 2 (equivalent to that the link set 2 includes the first link), and other links are reserved. Certainly, the first field may occupy three or more bits, to express a corresponding definition.

In other words, the first link does not belong to any link set, or belongs to the link set 1, or belongs to the link set 2, to be specific, the first link does not simultaneously belong to both the link set 1 and the link set 2.

Further, when a number of at least one link set is three, the first field is set to 11, it may represent that the first link belongs to the link set 3, or belongs to a link set whose index or identifier is 3.

It should be noted that definitions indicated by the value of the first field are not limited in embodiments of this application. For example, when a number of at least one link set is three, the first field is set to 00, representing that the first link belongs to the link set 1, or belongs to a link set whose index or identifier is 1 (equivalent to that the link set 1 includes the first link). When the first field is set to 01, it indicates that the first link belongs to the link set 2, or belongs to a link set whose index or identifier is 2 (equivalent to that the link set 2 includes the first link). When the first field is set to 10, it indicates that the first link belongs to the link set 3, or belongs to a link set whose index or identifier is 3 (equivalent to that the link set 3 includes the first link). When the first field is set to 11, it indicates that the first link does not belong to any link set in the at least one link set or does not belong to any link set. Definitions of the value of the first field are not limited in embodiments of this application, so that the link set to which the first link belongs may be indicated.

**Table 2-1**

| First field | Definition |
|---|---|
| 00 | Not belong to any link set |
| 01 | Belong to a link set 1 |
| 10 | Belong to a link set 2 |
| 11 | Reserved |

It should be noted that a number of bits occupied by the first field is not limited in embodiments of this application. For example, 3 bits may be occupied. When the first field is set to 000, it indicates that the first field does not belong to any link set. When the first field is set to 001, it indicates that the first field belongs to the link set 1. When the first field is set to 010, it indicates that the first field belongs to the link set 2. Other bits are reserved. For another example, 8 bits may be occupied, and details are not described herein.

Optionally, a bit length of the first field may be related to a number of link sets, or a length of bits occupied by the first field may be a fixed value.

For example, when a number of at least one link set is six, the first field may occupy 3 bits. Alternatively, a length of a first bit is fixed to 8 bits. For specific definitions of the values of the first field, refer to Table 2-2. Details are not described herein again.

**Table 2-2**

| First field | | Definition |
|---|---|---|
| 3 bits | 8 bits | |
| 000 | 00000000 | Not belong to any link set |
| 001 | 00000001 | Belong to a link set 1 |
| 010 | 00000010 | Belong to a link set 2 |
| 011 | 00000011 | Belong to a link set 3 |
| 100 | 00000100 | Belong to a link set 4 |
| 101 | 00000101 | Belong to a link set 5 |
| 110 | 00000110 | Belong to a link set 6 |
| 111 | 00000111 | Reserved |

It should be noted that in the table provided in embodiments of this application, a part that is not exhausted may be reserved, or may be used for another purpose. This is not limited herein.

It should be noted that the manner described in the manner 2 may be used for more or fewer link sets. In embodiments of this application, values of the first field, definitions corresponding to the values, and a number of occupied bits are not described in detail when the number of link sets is greater or fewer.

In this way, when a number of at least one link set is more than one and the first link does not simultaneously belong to a plurality of link sets (or the first link does not simultaneously belong to at least two link sets), the manner shown in Manner 2 may be used.

Manner 3: With reference to Table 3-1, when a number of at least one link set is more than one and the first link simultaneously belongs to a plurality of link sets (or the first link simultaneously belongs to at least two link sets), an example in which a number of at least one link set is two (for example, the link set 1 and the link set 2) is used. The first field may occupy 2 bits, and the first field is set to 00, 01 and 10. Definitions that are represented may be respectively the same as definitions represented in Manner 2. When the first field is set to 11, it indicates that the first link belongs to the link set 1 and the link set 2, or belongs to link sets whose indexes or identifiers are 1 and 2 (equivalent to that both the link set 1 and the link set 2 include the first link). Certainly, the first field may occupy three or more bits, to express a corresponding definition.

In other words, the first link does not belong to any link set, or belongs to the link set 1, or belongs to the link set 2, or belongs to both the link set 1 and the link set 2.

It should be noted that definitions of the values of the first field are not limited in embodiments of this application, so that the link set to which the first link belongs may be indicated.

**Table 3-1**

| First field | Definition |
|---|---|
| 00 | Not belong to any link set |
| 01 | Belong to a link set 1 |
| 10 | Belong to a link set 2 |
| 11 | Belong to a link set 1 and a link set 2 |

It should be noted that a number of bits occupied by the first field is not limited in embodiments of this application. For example, 3 bits may be occupied. When the first field is set to 000, it indicates that the first field does not belong to any link set. When the first field is set to 001, it indicates that the first field belongs to the link set 1. When the first field is set to 010, it indicates that the first field belongs to the link set 2. When the first field is set to 011, it indicates that the first field belongs to the link set 1 and the link set 2. Other bits are reserved. For another example, 8 bits may be occupied, and details are not described herein. Definitions of the value of the first field are not limited in embodiments of this application, so that the link set to which the first link belongs may be indicated.

Optionally, a bit length of the first field may be related to a number of link sets, or a length of bits occupied by the first field may be a fixed value.

For example, when a number of at least one link set is three, the first field may occupy 3 bits. Alternatively, a length of a first bit is fixed to 8 bits. For specific definitions of the values of the first field, refer to Table 3-2. Details are not described herein again.

**Table 3-2**

| First field | | Definition |
|---|---|---|
| 3 bits | 8 bits | |
| 000 | 00000000 | Not belong to any link set |
| 001 | 00000001 | Belong to a link set 1 |
| 010 | 00000010 | Belong to a link set 2 |
| 011 | 00000011 | Belong to a link set 3 |
| 100 | 00000100 | Belong to a link set 1 and a link set 2 |
| 101 | 00000101 | Belong to a link set 1 and a link set 3 |
| 110 | 00000110 | Belong to a link set 2 and a link set 3 |
| 111 | 00000111 | Belong to a link set 1, a link set 2, and a link set 3. |

It should be noted that the manner described in the manner 3 may be used for more or fewer link sets. In embodiments of this application, values of the first field, definitions corresponding to the values, and a number of occupied bits are not described in detail when the number of link sets is greater or fewer.

In this way, when a number of at least one link set is more than one and the first link simultaneously belongs to a plurality of link sets (or the first link simultaneously belongs to at least two link sets), the first field may be determined in a manner shown in the manner 3. In addition, when a number of at least one link set is more than one and the first link does not simultaneously belong to a plurality of link sets (or the first link does not simultaneously belong to at least two link sets), the manner shown in Manner 3 may also be used.

Manner 4: When a number of at least one link set is more than one, each first bit in the bits occupied by the first field is an indication definition from left to right or from right to left. The first bit may include a plurality of bits.

For example, the first bit may occupy 2 bits. For example, a number of at least one link set is three. 00 indicates that the first link does not belong to any link set in the at least one link set or does not belong to any link set (equivalent to that any link set does not include the first link). 01 indicates that the first link belongs to the link set 1, or belongs to a link set whose index or identifier is 1 (equivalent to that the link set 1 includes the first link). 10 indicates that the first link belongs to the link set 2, or belongs to a link set whose index or identifier is 2 (equivalent to that the link set 2 includes the first link). 11 indicates that the first link belongs to the link set 3, or belongs to a link set whose index or identifier is 3 (equivalent to that the link set 3 includes the first link). Certainly, the first bit may occupy three or more bit lengths, to express a corresponding definition.

For another example, when a number of at least one link set is six, the first bit may occupy 3 bits. 000 indicates that the first link does not belong to any link set in the at least one link set or does not belong to any link set. 001 indicates that the first link belongs to the link set 1, or belongs to a link set whose index or identifier is 1. 010 indicates that the first link belongs to the link set 2, or belongs to a link set whose index or identifier is 2. The rest can be deduced by analogy. 110 indicates that the first link belongs to the link set 6 or belongs to a link set whose index or identifier is 6. Certainly, the first bit of the first field may occupy four or more bits, to express a corresponding definition.

Optionally, a bit length included in the first bit may be related to a number of link sets, or a length of a bit included in the first bit may be a fixed value. For example, a length of the first bit is fixed to 8 bits.

It should be noted that in embodiments of this application, values of the first bit, definitions corresponding to the values, and a number of occupied bits are not described in detail when the number of link sets is greater or fewer.

With reference to Table 4-1, an example in which a number of at least one link set is two (for example, the link set 1 and the link set 2) is used. From left to right (as shown in Table 4-1) or from right to left, the first bit may occupy 2 bits, every 2 bits are one indication definition, and the first field may occupy 2 bits or a number of occupied bits is an integer multiple of 2 bits. For example, from left to right is used as an example. The first field is set to 00, representing that the first link does not belong to any link set in the at least one link set or does not belong to any link set. When the first field is set to 01, it indicates that the first link belongs to the link set 1, or belongs to a link set whose index or identifier is 1, but does not belong to the link set 2 (equivalent to that the link set 1 includes the first link, and the link set 2 does not include the first link). When the first field is set to 10, it indicates that the first link belongs to the link set 2, or belongs to a link set whose index or identifier is 2, but does not belong to the link set 1, or does not belong to a link set whose index or identifier is 2 (equivalent to that the link set 1 does not include the first link, and the link set 2 includes the first link). When the first field is set to 0110, it indicates that the first link belongs to the link set 1 and the link set 2, or belongs to link sets whose indexes or identifiers are 1 and 2 (equivalent to that both the link set 1 and the link set 2 include the first link).

**Table 4-1**

| First field | Definition |
|---|---|
| 00 | Not belong to any link set |
| 01 | Belong to a link set 1 |
| 10 | Belong to a link set 2 |
| 0110 | Belong to a link set 1 and a link set 2 |

In other words, the first link does not belong to any link set, or belongs to the link set 1, or belongs to the link set 2, or belongs to both the link set 1 and the link set 2.

It should be noted that definitions of the values of the first field are not limited in embodiments of this application, so that the link set to which the first link belongs may be indicated.

It should be noted that a number of bits occupied by the first field is not limited in embodiments of this application. For example, the first field may occupy 6 bits. When the first field is set to 000000, it indicates that the first field does not belong to any link set. When the first field is set to 010000, it indicates that the first field belongs to the link set 1. When the first field is set to 100000, it indicates that the first field belongs to the link set 2. When the first field is set to 011000, it indicates that the first field belongs to the link set 1 and the link set 2. Other bits are reserved. For another example, 8 bits may be occupied, and details are not described herein. Definitions of the value of the first field are not limited in embodiments of this application, so that the link set to which the first link belongs may be indicated.

In addition, a format of the first field is not limited in embodiments of this application. For example, an example in which a number of at least one link set is two (for example, the link set 1 and the link set 2) is used. Each first bit is one indication definition. For example, the first bit occupies 2 bits. 00 indicates that the first link does not belong to a link set, 01 indicates that the first link belongs to the link set 1, and 10 indicates that the first link belongs to the link set 2. Each first bit corresponds to one link set. For example, the 1st first bit corresponds to the link set 1, the 2nd first bit corresponds to the link set 2, and rest can be deduced by analogy. This is not limited in this application.

For example, the first bit occupies 2 bits. From left to right is used as an example. The first field is set to 0000, representing that the first field does not belong to any link set. When the first field is set to 0100, it indicates that the first link belongs to the link set 1 and does not belong to the link set 2. In 0100, the first 2 bits 01 indicates that the first link belongs to the link set 1, and the second 2 bits 00 indicates that the first link does not belong to the link set 2. When the first field is set to 0010, it indicates that the first link does not belong to the link set 1 but belongs to the link set 2. In 0010, the first 2 bits 00 indicates that the first link does not belong to the link set 1, and the second 2 bits 10 indicates that the first link belongs to the link set 2. When the first field is set to 0110, it indicates that the first link belongs to the link set 1 and the link set 2. In 0110, the first 2 bits 01 indicates that the first link belongs to the link set 1, and the second 2 bits 10 indicates that the first link belongs to the link set 2.

With reference to Table 4-2, an example in which a number of at least one link set is three (for example, the link set 1, the link set 2, and the link set 3) is used. From left to right (as shown in Table 4-2) or from right to left, the first bit may occupy 2 bits, every 2 bits are one indication definition, and the first field may occupy 2 bits or a number of occupied bits is an integer multiple of 2 bits. For details, refer to Table 4-2. Specific descriptions are similar to those in Table 4-1, and details are not described herein again.

**Table 4-2**

| First field | Definition |
|---|---|
| 00 | Not belong to any link set |
| 01 | Belong to a link set 1 |
| 10 | Belong to a link set 2 |
| 11 | Belong to a link set 3 |
| 0110 | Belong to a link set 1 and a link set 2 |
| 0111 | Belong to a link set 1 and a link set 3 |
| 1011 | Belong to a link set 2 and a link set 3 |
| 011011 | Belong to a link set 1, a link set 2, and a link set 3 |

Optionally, a bit length of the first field may be related to a number of link sets. For example, a number of at least one link set is N, where N is a positive integer, and bits occupied by the first field are N times of the first bit. Alternatively, a length of bits occupied by the first field may be a fixed value.

For example, when a number of at least one link set is four, the first bit may occupy 3 bits, and the first field may occupy 3 bits or a number of occupied bits is an integer multiple of 3 bits. Alternatively, a length of the first bit is fixed to 15 bits, and details are not described herein again.

It should be noted that the manner described in the manner 4 may be used for more or fewer link sets. In embodiments of this application, values of the first field, definitions corresponding to the values, and a number of occupied bits are not described in detail when the number of link sets is greater or fewer.

In this way, when a number of at least one link set is more than one and the first link simultaneously belongs to a plurality of link sets (or the first link simultaneously belongs to at least two link sets), the first field may be determined in a manner similar to the manner shown in Manner 4. In addition, when a number of at least one link set is more than one and the first link does not simultaneously belong to a plurality of link sets (or the first link does not simultaneously belong to at least two link sets), the manner shown in Manner 4 may also be used.

In some embodiments, the first field may be a bitmap.

Optionally, the bit length of the first field may be related to the number of link sets. For example, a number of bits of a bitmap may be equal to the number of link sets.

For example, from left to right (or from right to left), if a value of the first bit is 0, it indicates that the first link does not belong to the link set 1 or does not belong to the link set whose index or identifier is 1 (equivalent to that the link set 1 does not include the first link), and if a value of the first bit is 1, it indicates that the first link belongs to the link set 1 or belongs to the link set whose index or identifier is 1 (equivalent to that the link set 1 includes the first link). Similarly, if a value of the second bit is 0, it indicates that the first link does not belong to the link set 2 (equivalent to that the link set 2 does not include the first link), and if a value of the second bit is 1, it indicates that the first link belongs to the link set 2 (equivalent to that the link set 2 includes the first link). The rest can be deduced by analogy. If a value of the n^{th} bit is 0, it indicates that the first link does not belong to a link set n (equivalent to that the link set n does not include the first link), and if a value of the n^{th} bit is 1, it indicates that the first link belongs to the link set n (equivalent to that the link set n includes the first link). Embodiments of this application are sequentially described by using examples.

Alternatively, if a value of the first bit is 0, it indicates that the link belongs to the link set 1, and if a value of the first bit is 1, it indicates that the link does not belong to the link set 1. This is similar to other cases. This is not limited in embodiments of this application.

For example, the link set to which the first link belongs is indicated in at least the following manner 5 to manner 7.

Manner 5: With reference to Table 5, an example in which a quantity of at least one link set is one (for example, the link set 1). The first field may occupy 1 bit. A bitmap is 0, representing that the first link does not belong to the link set 1 or a link set whose index or identifier is 1 (equivalent to that the link set 1 does not include the first link). A bitmap is 1, representing that the first link belongs to the link set 1 or a link set whose index or identifier is 1 (equivalent to that the link set 1 includes the first link).

**Table 5**

| First field | Definition |
|---|---|
| 0 | Not belong to any link set |
| 1 | Belong to a link set 1 |

It should be noted that a number of bits occupied by the first field is not limited in embodiments of this application. For example, when a number of at least one link set is one, the first field may occupy 3 bits. When the first field is set to 000, it indicates that the first field does not belong to any link set. When the first field is set to 100, it indicates that the first field belongs to the link set 1 (from left to right is used as an example). For another example, 8 bits may be occupied. When the first field is set to 00000000, it indicates that the first field does not belong to any link set. When the first field is set to 10000000, it indicates that the first field belongs to the link set 1.

In this way, when a number of at least one link set is one, the first field may be determined in the manner shown in the manner 5.

Manner 6: With reference to Table 6-1, when a number of at least one link set is more than one and the first link does not simultaneously belong to a plurality of link sets (or the first link belongs to one link set), an example in which a number of at least one link set is two (for example, the link set 1 and the link set 2) is used. The first field occupies 2 bits. From left to right is used as an example. A bitmap is 00, representing that the first link does not belong to any link set in the at least one link set or does not belong to any link set (equivalent to that any link set does not include the first link). If a bitmap is 10, it indicates that the first link belongs to the link set 1, or belongs to a link set whose index or identifier is 1 (equivalent to that the link set 1 includes the first link). If a bitmap is 01, it indicates that the first link belongs to the link set 2, or belongs to a link set whose index or identifier is 2 (equivalent to that the link set 2 includes the first link). Certainly, the first field may occupy three or more bits, to express a corresponding definition.

In other words, the first link does not belong to any link set, or belongs to the link set 1, or belongs to the link set 2, to be specific, the first link does not simultaneously belong to both the link set 1 and the link set 2.

**Table 6-1**

| First field | Definition |
|---|---|
| 00 | Not belong to any link set |
| 10 | Belong to a link set 1 |
| 01 | Belong to a link set 2 |

For example, with reference to Table 6-2, when a number of at least one link set is more than one, an example in which a number of at least one link set is three (for example, the link set 1, the link set 2, and the link set 3) is used. For specific definitions of values of the first field, refer to Table 6-2. The descriptions are similar to those in Table 6-1, and details are not described herein again.

**Table 6-2**

| First field | Definition |
|---|---|
| 000 | Not belong to any link set |
| 100 | Belong to a link set 1 |
| 010 | Belong to a link set 2 |
| 001 | Belong to a link set 3 |

It should be noted that the manner described in the manner 6 may be used for more or fewer link sets. In embodiments of this application, values of the first field, definitions corresponding to the values, and a number of occupied bits are not described in detail when the number of link sets is greater or fewer. In addition, a number of bits occupied by the first field is not limited in embodiments of this application.

In this way, when a number of at least one link set is more than one and the first link does not simultaneously belong to a plurality of link sets (or the first link does not simultaneously belong to at least two link sets), the manner shown in Manner 6 may be used.

Manner 7: With reference to Table 7-1, when a number of at least one link set is more than one and the first link may simultaneously belong to a plurality of link sets (or the first link simultaneously belongs to at least two link sets), an example in which a number of at least one link set is two (for example, the link set 1 and the link set 2) is used. The first field may occupy 2 bits, and the bitmap is 00, 10, and 01. Definitions that are represented may be respectively the same as definitions in Manner 6. If the bitmap is 11, it indicates that the first link belongs to the link set 1 and the link set 2, or belongs to link sets whose indexes or identifiers are 1 and 2 (equivalent to that both the link set 1 and the link set 2 include the first link). Certainly, the first field may occupy three or more bits, to express a corresponding definition.

In other words, the first link does not belong to any link set, or belongs to the link set 1, or belongs to the link set 2, or belongs to both the link set 1 and the link set 2.

**Table 7-1**

| First field | Definition |
|---|---|
| 00 | Not belong to any link set |
| 10 | Belong to a link set 1 |
| 01 | Belong to a link set 2 |
| 11 | Belong to a link set 1 and a link set 2 |

For example, with reference to Table 7-2, when a number of at least one link set is more than one, an example in which a number of at least one link set is three (for example, the link set 1, the link set 2, and the link set 3) is used. For specific definitions of values of the first field, refer to Table 7-2. The descriptions are similar to those in Table 7-1, and details are not described herein again.

It should be noted that the manner described in the manner 7 may be used for more or fewer link sets. In embodiments of this application, values of the first field, definitions corresponding to the values, and a number of occupied bits are not described in detail when the number of link sets is greater or fewer. In addition, a number of bits occupied by the first field is not limited in embodiments of this application.

**Table 7-2**

| First field | Definition |
|---|---|
| 000 | Not belong to any link set |
| 100 | Belong to a link set 1 |
| 010 | Belong to a link set 2 |
| 001 | Belong to a link set 3 |
| 110 | Belong to a link set 1 and a link set 2 |
| 101 | Belong to a link set 1 and a link set 3 |
| 011 | Belong to a link set 2 and a link set 3 |
| 111 | Belong to a link set 1, a link set 2, and a link set 3 |

In this way, when a number of at least one link set is more than one and the first link simultaneously belongs to a plurality of link sets (or the first link simultaneously belongs to at least two link sets), the manner shown in Manner 7 may be used. In addition, when a number of at least one link set is more than one and the first link does not simultaneously belong to a plurality of link sets (or the first link does not simultaneously belong to at least two link sets), the manner shown in Manner 7 may also be used.

In some embodiments, the first field may be carried in a Per-STA Profile field that is configured for each station and that is of a multi-link element (Multi-Link element).

For example, the multi-link element may include a basic variant multi-link element, as shown in FIG. 6A and FIG. 6B.

For example, with reference to FIG. 2 and FIG. 6A and FIG. 6B, for the link 1, the first field may be carried in a Per-STA Profile x field. Sequentially, for the link 2, the first field may be carried in a Per-STA Profile y field. The link 3 to a link n may be deduced by analogy, and details are not described herein again. Certainly, a Per-STA Profile field carrying the first field corresponding to each link is not limited in embodiments of this application.

It should be noted that a frame format of the multi-link element is not limited in embodiments of this application, and the first field may be carried in a multi-link element in another frame format. In embodiments of this application, the frame format shown in FIG. 6A and FIG. 6B is used as an example for description.

Optionally, the first frame may include a Basic variant Multi-Link element. The Basic variant Multi-Link element field includes a link information (Link Info) field, the Link Info field includes a Per-STA Profile field configured for each station, the Per-STA Profile field includes a station information (STA Info) field, and the STA Info field includes the first field.

In other words, with reference to FIG. 6A and FIG. 6B, the first field may be carried in the STAInfo field of the basic variant multi-link element.

Optionally, the first frame may include a Basic variant Multi-Link element, the Basic variant Multi-Link element field includes a link information (Link Info) field, the Link Info field includes a Per-STA Profile field configured for each station, the Per-STA Profile field includes a station information STA Control field, and the STA Control field includes the first field.

In other words, with reference to FIG. 6A and FIG. 6B, the first field may be carried in the STA Control field of the basic variant multi-link element.

In some embodiments, the first field may be referred to as an EMLMR Link Set Indication (EMLMR Link Set Indication) field. Optionally, this may correspond to a case that the first field indicates whether the first link belongs to the first link set.

For example, with reference to FIG. 8, the EMLMR Link Set Indication field may be carried in the STA Info field.

For example, with reference to FIG. 9, the EMLMR Link Set Indication field may be carried in the STA Control field.

In some other embodiments, the first field may be referred to as an EMLMR link set identifier (EMLMR Link Set Identifier) field. Optionally, this may correspond to a manner 1 to a manner 4.

For example, with reference to FIG. 10, the EMLMR Link Set Identifier field may be carried in the STA Info field.

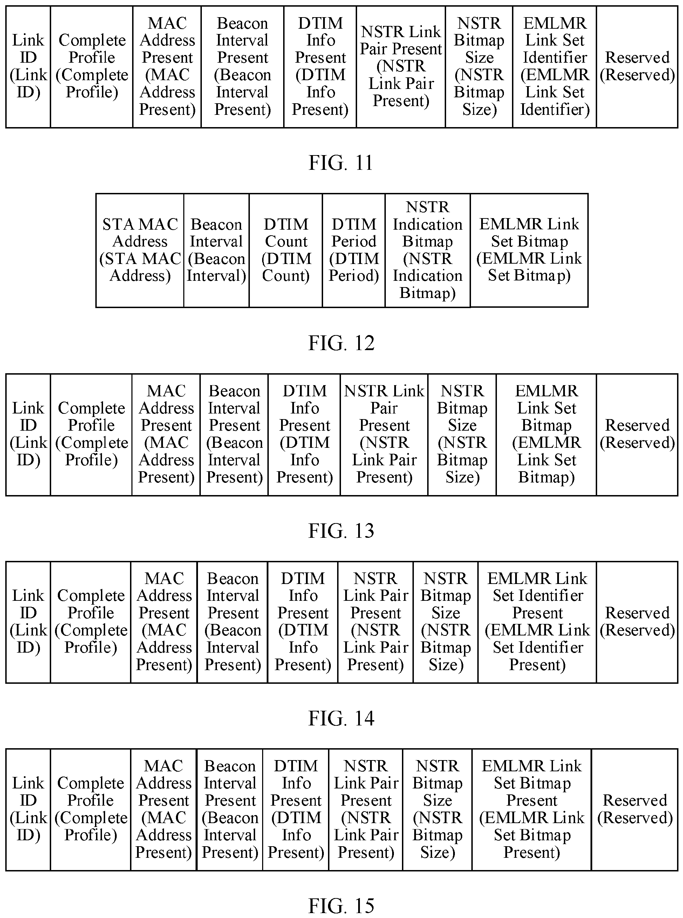

For another example, with reference to FIG. 11, the EMLMR Link Set Identifier field may be carried in the STA Control field.

In some other embodiments, the first field may be referred to as an EMLMR Link Set Bitmap (EMLMR Link Set Bitmap) field. Optionally, this may correspond to a manner 5 to a manner 7.

For example, with reference to FIG. 12, the EMLMR Link Set Bitmap field may be carried in the STA Info field.

For another example, with reference to FIG. 13, the EMLMR Link Set Bitmap field may be carried in the STA Control field.

In a possible design manner, if the first field indicates that the first link belongs to two or more link sets, the first link belongs to a union link set, and the union link set is a union set of the two or more link sets.

For example, it is assumed that a number of link sets is two: a link set 1 {link 1, link 2} and a link set 2 {link 1, link 3 }, and a union set of the link set 1 and the link set 2 is {link 1, link 2, link 3}. In this case, the link 1 belongs to the union link set {link 1, link 2, link 3}.

For example, the first link is a sending link or a receiving link.

In this way, if the first link belongs to two or more link sets, using the union link set for the first link may resolve a problem that when the first link belongs to two or more link sets, a link set currently used for the first link cannot be determined, for example, whether performing an operation by using the link set 1 or the link set 2 is unknown.

In a possible design manner, the first frame may further include a second field, and the second field may indicate whether the first field exists.

For example, the second field may occupy 1 bit. The second field is set to 0, indicating that the first field does not exist, and the second field is set to 1, indicating that the first field exists. Alternatively, when the second field is set to 1, it indicates that the first field does not exist, and when the second field is set to 0, it indicates that the first field exists.

It should be noted that in embodiments of this application, an example in which the second field is set to 0, indicating that the first field does not exist, and the second field is set to 1, indicating that the first field exists is used for description.

Optionally, the first frame may include the first field and the second field.

In some embodiments, the second field may be used with reference to the foregoing manner 1 to manner 7.

For example, the second field is used with reference to the foregoing manner 1. Referring to Table 8, the second field is set to 0, and the first field does not exist. The second field is set to 1. For the definitions of the values of the first field, refer to the foregoing manner 1. Details are not described herein again.

**Table 8**

| Second field | First field | Definition |
|---|---|---|
| 0 | Do not exist | |
| 1 | 0 | Not belong to any link set |
| 1 | 1 | Belong to a link set 1 |

For example, the second field is used with reference to the foregoing manner 2. Referring to Table 9 (using an example in which the second field is used with reference to Table 2-1), the second field is set to 0, and the first field does not exist. The second field is set to 1. For the definitions of the values of the first field, refer to the foregoing manner 2. Details are not described herein again.

**Table 9**

| Second field | First field | Definition |
|---|---|---|
| 0 | Do not exist | |
| 1 | 00 | Not belong to any link set |
| 1 | 01 | Belong to a link set 1 |
| 1 | 10 | Belong to a link set 2 |
| 1 | 11 | Reserved |

For example, the second field is used with reference to the foregoing manner 3. Referring to Table 10 (using an example in which the second field is used with reference to Table 3-1), the second field is set to 0, and the first field does not exist. The second field is set to 1. For the definitions of the values of the first field, refer to the foregoing manner 3. Details are not described herein again.

**Table 10**

| Second field | First field | Definition |
|---|---|---|
| 0 | Do not exist | |
| 1 | 00 | Not belong to any link set |
| 1 | 01 | Belong to a link set 1 |
| 1 | 10 | Belong to a link set 2 |
| 1 | 11 | Belong to a link set 1 and a link set 2 |

For example, the second field is used with reference to the foregoing manner 4. Referring to Table 11 (using an example in which the second field is used with reference to Table 4-1), the second field is set to 0, and the first field does not exist. The second field is set to 1. For the definitions of the values of the first field, refer to the foregoing manner 4. Details are not described herein again.

**Table 11**

| Second field | First field | Definition |
|---|---|---|
| 0 | Do not exist | |
| 1 | 00 | Not belong to any link set |
| 1 | 01 | Belong to a link set 1 |
| 1 | 10 | Belong to a link set 2 |
| 1 | 0110 | Belong to a link set 1 and a link set 2 |

For example, the second field is used with reference to the foregoing manner 5. Referring to Table 12, the second field is set to 0, and the first field does not exist. The second field is set to 1. For the definitions of the values of the first field, refer to the foregoing manner 5. Details are not described herein again.

**Table 12**

| Second field | First field | Definition |
|---|---|---|
| 0 | Do not exist | |
| 1 | 0 | Not belong to any link set |
| 1 | 1 | Belong to a link set 1 |

For example, the second field is used with reference to the foregoing manner 6. Referring to Table 13 (using an example in which the second field is used with reference to Table 6-1), the second field is set to 0, and the first field does not exist. The second field is set to 1. For the definitions of the values of the first field, refer to the foregoing manner 6. Details are not described herein again.

**Table 13**

| Second field | First field | Definition |
|---|---|---|
| 0 | Do not exist | |
| 1 | 00 | Not belong to any link set |
| 1 | 10 | Belong to a link set 1 |
| 1 | 01 | Belong to a link set 2 |

For example, the second field is used with reference to the foregoing manner 7. Referring to Table 14 (using an example in which the second field is used with reference to Table 7-1), the second field is set to 0, and the first field does not exist. The second field is set to 1. For the definitions of the values of the first field, refer to the foregoing manner 7. Details are not described herein again.

**Table 14**

| Second field | First field | Definition |
|---|---|---|
| 0 | Do not exist | |
| 1 | 00 | Not belong to any link set |
| 1 | 10 | Belong to a link set 1 |
| 1 | 01 | Belong to a link set 2 |
| 1 | 11 | Belong to a link set 1 and a link set 2 |

In some embodiments, if the second field indicates that the first field does not exist, the second field further indicates that the first link does not belong to any link set in the at least one link set.

In other words, if the second field indicates that the first field does not exist, the second field may indirectly indicate that the first link does not belong to any link set in the at least one link set.

Optionally, if the second field further indicates that the first link does not belong to any link set in the at least one link set, the first field may not indicate that the first link does not belong to any link set in the at least one link set, or the first field may indicate that the first link does not belong to any link set in the at least one link set.

For example, the second field is used with reference to the foregoing manner 1. Correspondingly, the first field does not indicate that the first link does not belong to any link set in the at least one link set. Refer to Table 15-1. Correspondingly, the first field indicates that the first link does not belong to any link set in the at least one link set. Refer to Table 15-2. The second field is set to 0, the first field does not exist, and the first link does not belong to any link. The second field is set to 1. For the definitions of the values of the first field, refer to the foregoing manner 1. Details are not described herein again.

**Table 15-1**

| Second field | First field | Definition |
|---|---|---|
| 0 | Do not exist | Not belong to any link set |
| 1 | 1 | Belong to a link set 1 |

**Table 15-2**

| Second field | First field | Definition |
|---|---|---|
| 0 | Do not exist | Not belong to any link set |
| 1 | 0 | Not belong to any link set |
| 1 | 1 | Belong to a link set 1 |

For example, the second field is used with reference to the foregoing manner 2. Correspondingly, the first field does not indicate that the first link does not belong to any link set in the at least one link set. Refer to Table 16-1 (using an example in which Table 16-1 is used with reference to Table 2-1). Correspondingly, the first field indicates that the first link does not belong to any link set in the at least one link set. Refer to Table 16-2 (using an example in which Table 16-2 is used with reference to Table 2-1). The second field is set to 0, the first field does not exist, and the first link does not belong to any link. The second field is set to 1. For the definitions of the values of the first field, refer to the foregoing manner 2. Details are not described herein again.

**Table 16-1**

| Second field | First field | Definition |
|---|---|---|
| 0 | Do not exist | Not belong to any link set |
| 1 | 01 | Belong to a link set 1 |
| 1 | 10 | Belong to a link set 2 |
| 1 | 11 | Reserved |

**Table 16-2**

| Second field | First field | Definition |
|---|---|---|
| 0 | Do not exist | Not belong to any link set |
| 1 | 00 | Not belong to any link set |
| 1 | 01 | Belong to a link set 1 |
| 1 | 10 | Belong to a link set 2 |
| 1 | 11 | Reserved |

Similarly, for example, the second field is used with reference to the foregoing manner 3. Correspondingly, the first field does not indicate that the first link does not belong to any link set in the at least one link set. Refer to Table 17-1 (using an example in which Table 17-1 is used with reference to Table 3-1). Correspondingly, the first field indicates that the first link does not belong to any link set in the at least one link set. Refer to Table 17-2 (using an example in which Table 17-2 is used with reference to Table 3-1). The second field is set to 0, the first field does not exist, and the first link does not belong to any link. The second field is set to 1. For the definitions of the values of the first field, refer to the foregoing manner 3. Details are not described herein again.

**Table 17-1**

| Second field | First field | Definition |
|---|---|---|
| 0 | Do not exist | Not belong to any link set |
| 1 | 01 | Belong to a link set 1 |
| 1 | 10 | Belong to a link set 2 |
| 1 | 11 | Belong to a link set 1 and a link set 2 |

**Table 17-2**

| Second field | First field | Definition |
|---|---|---|
| 0 | Do not exist | Not belong to any link set |
| 1 | 00 | Not belong to any link set |
| 1 | 01 | Belong to a link set 1 |
| 1 | 10 | Belong to a link set 2 |
| 1 | 11 | Belong to a link set 1 and a link set 2 |

Similarly, for example, the second field is used with reference to the foregoing manner 4. Correspondingly, the first field does not indicate that the first link does not belong to any link set in the at least one link set. Refer to Table 18-1 (using an example in which Table 18-1 is used with reference to Table 4-1). Correspondingly, the first field indicates that the first link does not belong to any link set in the at least one link set. Refer to Table 18-2 (using an example in which Table 18-2 is used with reference to Table 4-1). The second field is set to 0, the first field does not exist, and the first link does not belong to any link. The second field is set to 1. For the definitions of the values of the first field, refer to the foregoing manner 4. Details are not described herein again.

**Table 18-1**

| Second field | First field | Definition |
|---|---|---|
| 0 | Do not exist | Not belong to any link set |
| 1 | 01 | Belong to a link set 1 |
| 1 | 10 | Belong to a link set 2 |
| 1 | 0110 | Belong to a link set 1 and a link set 2 |

Similarly, for example, the second field is used with reference to the foregoing manner 5. Correspondingly, the first field does not indicate that the first link does not belong to any link set in the at least one link set. Refer to Table 19-1 (using an example in which Table 19-1 is used with reference to Table 5-1). Correspondingly, the first field indicates that the first link does not belong to any link set in the at least one link set. Refer to Table 19-2 (using an example in which Table 19-2 is used with reference to Table 5-1). The second field is set to 0, the first field does not exist, and the first link does not belong to any link. The second field is set to 1. For the definitions of the values of the first field, refer to the foregoing manner 5. Details are not described herein again.

**Table 18-2**

| Second field | First field | Definition |
|---|---|---|
| 0 | Do not exist | Not belong to any link set |
| 1 | 00 | Not belong to any link set |
| 1 | 01 | Belong to a link set 1 |
| 1 | 10 | Belong to a link set 2 |
| 1 | 0110 | Belong to a link set 1 and a link set 2 |

**Table 19-1**

| Second field | First field | Definition |
|---|---|---|
| 0 | Do not exist | Not belong to any link |
| 1 | 1 | Belong to a link set 1 |

**Table 19-2**

| Second field | First field | Definition |
|---|---|---|
| 0 | Do not exist | Not belong to any link |
| 1 | 0 | Not belong to any link set |
| 1 | 1 | Belong to a link set 1 |

Similarly, for example, the second field is used with reference to the foregoing manner 6. Correspondingly, the first field does not indicate that the first link does not belong to any link set in the at least one link set. Refer to Table 20-1 (using an example in which Table 20-1 is used with reference to Table 6-1). Correspondingly, the first field indicates that the first link does not belong to any link set in the at least one link set. Refer to Table 20-2 (using an example in which Table 20-2 is used with reference to Table 6-1). The second field is set to 0, the first field does not exist, and the first link does not belong to any link. The second field is set to 1. For the definitions of the values of the first field, refer to the foregoing manner 6. Details are not described herein again.

**Table 20-1**

| Second field | First field | Definition |
|---|---|---|
| 0 | Do not exist | Not belong to any link set |
| 1 | 10 | Belong to a link set 1 |
| 1 | 01 | Belong to a link set 2 |

**Table 20-2**

| Second field | First field | Definition |
|---|---|---|
| 0 | Do not exist | Not belong to any link set |
| 1 | 00 | Not belong to any link set |
| 1 | 10 | Belong to a link set 1 |
| 1 | 01 | Belong to a link set 2 |

Similarly, for example, the second field is used with reference to the foregoing manner 7. Correspondingly, the first field does not indicate that the first link does not belong to any link set in the at least one link set. Refer to Table 21-1 (using an example in which Table 21-1 is used with reference to Table 7-1). Correspondingly, the first field indicates that the first link does not belong to any link set in the at least one link set. Refer to Table 21-2 (using an example in which Table 21-2 is used with reference to Table 7-1). The second field is set to 0, the first field does not exist, and the first link does not belong to any link. The second field is set to 1. For the definitions of the values of the first field, refer to the foregoing manner 7. Details are not described herein again.

**Table 21-1**

| Second field | First field | Definition |
|---|---|---|
| 0 | Do not exist | Not belong to any link set |
| 1 | 10 | Belong to a link set 1 |
| 1 | 01 | Belong to a link set 2 |
| 1 | 11 | Belong to a link set 1 and a link set 2 |

**Table 21-2**

| Second field | First field | Definition |
|---|---|---|
| 0 | Do not exist | Not belong to any link set |
| 1 | 00 | Not belong to any link set |
| 1 | 10 | Belong to a link set 1 |
| 1 | 01 | Belong to a link set 2 |
| 1 | 11 | Belong to a link set 1 and a link set 2 |

It should be noted that in embodiments of this application, if a definition indicated by a value of the first field is not described, the value of the first field may be reserved or used for another purpose. For example, in Table 15-1, a definition indicated when the value of the first field is 0 is not described, and the value 0 of the first field may be reserved or used for another purpose.

In a possible design manner, the second field is carried in the Per-STAProfile field that is configured for each station and that is of the multi-link element (Multi-Link element).

For example, with reference to FIG. 2 and FIG. 6A and FIG. 6B, for the link 1, the second field may be carried in the Per-STA Profile x field. Sequentially, for the link 2, the second field may be carried in the Per-STA Profile y field. The link 3 to a link n may be deduced by analogy, and details are not described herein again. Certainly, a Per-STA Profile field carrying the second field corresponding to each link is not limited in embodiments of this application.

It should be noted that a frame format of the multi-link element is not limited in embodiments of this application, and the second field may be carried in a multi-link element in another frame format. In embodiments of this application, the frame format shown in FIG. 6A and FIG. 6B is used as an example for description.

Optionally, the first frame may include a Basic variant Multi-Link element, the Basic variant Multi-Link element field includes a link information Link Info field, the Link Info field includes a Per-STA Profile field configured for each station, the Per-STA Profile field includes a station information STA Control field, and the STA Control field includes the second field.

In other words, with reference to FIG. 6A and FIG. 6B, the second field may be carried in the STA Control field of the basic variant multi-link element.

In some embodiments, the second field may be referred to as an EMLMR Link Set Identifier Present (EMLMR Link Set Identifier Present) field. Optionally, this may correspond to a case that the second field is combined with the manner 1 to the manner 4.

For example, with reference to FIG. 14, the EMLMR Link Set Identifier Present field may be carried in the STA Control field.

In some other embodiments, the second field may be referred to as an EMLMR Link Set Bitmap Present (EMLMR Link Set Bitmap Present) field. Optionally, this may correspond to a case that the second field is combined with the manner 5 to the manner 7, for example, a case that the first field is a bitmap.

For example, with reference to FIG. 15, the EMLMR Link Set Bitmap Present field may be carried in the STA Control field.

Optionally, when the second field is combined with the first field, the second field may be carried in the STA Control field, and the first field may be carried in the STA Info field.

For example, the EMLMR Link Set Identifier Present field is carried in the STA Control field, and the EMLMR Link Set Identifier Present Link Set Identifier field may be carried in the STA Info field.

For another example, the EMLMR Link Set Identifier Present field is carried in the STA Control field, and the EMLMR Link Set Identifier field may be carried in the STA Control field.

For another example, the EMLMR Link Set Bitmap Present field is carried in the STA Control field, and the EMLMR Link Set Bitmap field may be carried in the STA Info field.

For another example, the EMLMR Link Set Bitmap Present field is carried in the STA Control field, and the EMLMR Link Set Bitmap field may be carried in the STA Control field.

In a possible design manner, the first frame may further include a third field, and the third field may indicate a number of at least one link set.

Optionally, the first frame includes the first field, or the first frame includes the first field and the second field, or the first frame includes the first field and the third field, or the first frame includes the first field, the second field, and the third field.

In some embodiments, the first MLD or the second MLD may determine a length of the first field or an effective length of the first field based on the third field.

For example, it is assumed that the third field indicates that the number of at least one link set is 1, the first field may occupy at least 1 bit. For example, it is specified that the length of the first field is 8 bits, and the effective length of the first field is 1 bit.

Corresponding to the manner 2, it is assumed that the third field indicates that the number of at least one link set is three, the first field may occupy at least 2 bits. For example, the length of the first field may be 6 bits, and the effective length of the first field is 2 bits.

Corresponding to the manner 4, it is assumed that the third field indicates that the number of at least one link set is three, the first field may occupy 2 bits, or the number of occupied bits is an integer multiple of 2 bits. For example, the length of the first field may be 6 bits, and the effective length of the first field may be 2 bits, 4 bits, or 6 bits.

Corresponding to the manner 7, it is assumed that the third field indicates that the number of at least one link set is three, the first field may occupy at least 3 bits. For example, the length of the first field may be 6 bits, and the effective length of the first field is 3 bits.

It should be noted that the length or the effective length of the first field corresponding to each manner is not described in detail in embodiments of this application.

In some embodiments, the third field may be carried in a common information Common Info field of the multi-link element (Multi-Link element).

For example, the multi-link element may include a basic variant multi-link element, as shown in FIG. 6A and FIG. 6B.

Optionally, the first frame may include a basic variant multi-link element Basic variant Multi-Link element, the Basic variant Multi-Link element field may include the common information Common Info field, and the Common Info field may include the third field.

In other words, with reference to FIG. 6A and FIG. 6B, the third field may be carried in the Common Info field of the basic variant multi-link element.

In some embodiments, the third field may be referred to as a Number of EMLMR Link Sets (Number of EMLMR Link Sets) field.

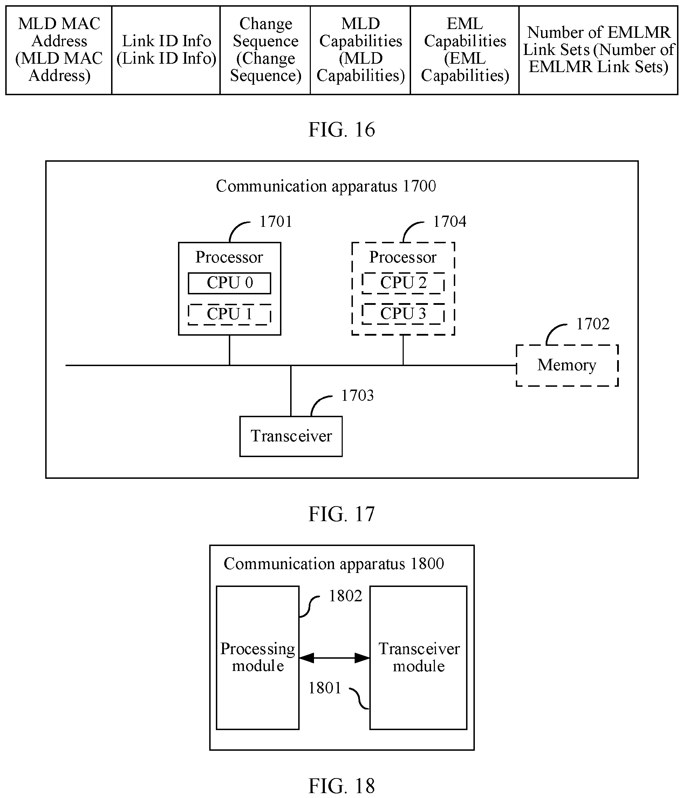

For example, with reference to FIG. 16, the Number of EMLMR Link Sets field may be carried in the Common Info field.

Optionally, the first MLD may support an EMLMR operation mode.

In a possible design manner, the first field may indicate whether the first link and one or more second links belong to a link set.

Optionally, the first frame may include the first field.

Optionally, the second link is a link in the at least one link established by the first MLD and the second MLD except the first link.

For example, links established between the first MLD and the second MLD include a link 1, a link 2, and a link 3. When the first link is the link 1, the second link is the link 2 or the link 3. When the first link is the link 2, the second link is the link 1 or the link 3.

In some embodiments, the first field may include one or more bits. Optionally, the first field may be a bitmap.

For example, if a bit corresponding to the second link is set to 0, it indicates that the first link and the second link do not belong to a same link set, and if a bit corresponding to the second link is set to 1, it indicates that the first link and the second link belong to a same link set. This is used as an example for description in embodiments of this application.

Alternatively, for example, if a bit corresponding to the second link is set to 1, it indicates that the first link and the second link do not belong to a same link set, and if a bit corresponding to the second link is set to 0, it indicates that the first link and the second link belong to a same link set.

For example, with reference to Table 22, an example in which a number of links is five is used, and the links are respectively a link 1 to a link 5. The first field corresponding to the link 1 may indicate whether the link 1 and the link 2 to the link 5 respectively belong to a same link set. For example, the first field is 1100. From left to right is used as an example. A bit corresponding to the link 2 is 1, a bit corresponding to the link 2 is 1, a bit corresponding to the link 2 is 0, and a bit corresponding to the link 2 is 0. In this case, the first field indicates that the link 1, the link 2, and the link 3 belong to a same link set, and the link 1, the link 4, and the link 5 do not belong to a same link set. The first field respectively corresponding to the link 2 to the link 5 is similar to the first field, and details are not described herein again.

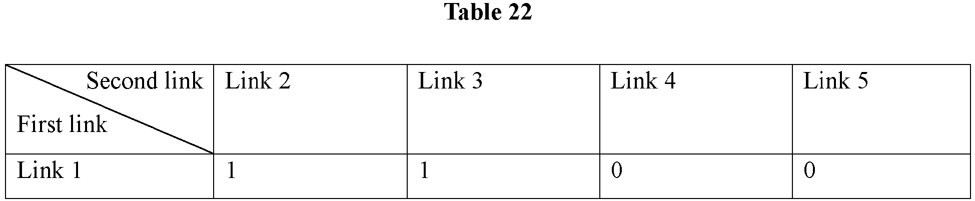

It should be noted that the first field corresponding to the first link may not indicate whether the first link and the first link belong to a same link set. In the bitmap, a bit location of the first link in the first field is not limited.

Optionally, when the bit location of the first link exists in the first field, a value of the bit location corresponding to the first link is not limited, for example, a value may be 1 or 0.

For example, with reference to Table 23, an example in which a number of links is 5 and a value of the bit location corresponding to the first link is 1 is used, and the links are respectively the link 1 to the link 5. The first field corresponding to the link 1 may indicate whether the link 1 and the link 2 to the link 5 respectively belong to a same link set. For example, the first field is 11100. From left to right is used as an example. A bit corresponding to a link 1 is 1, a bit corresponding to the link 2 is 1, a bit corresponding to the link 2 is 1, a bit corresponding to the link 2 is 0, and a bit corresponding to the link 2 is 0. In this case, the first field indicates that the link 1, the link 2, and the link 3 belong to a same link set, and the link 1, the link 4, and the link 5 do not belong to a same link set. The first field respectively corresponding to the link 2 to the link 5 is similar to the first field, and details are not described herein again.

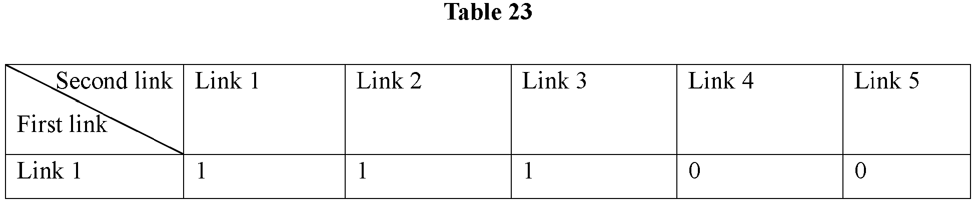

In some embodiments, the first field may be carried in a Per-STA Profile field that is configured for each station and that is of a multi-link element (Multi-Link element).

For example, with reference to FIG. 6A and FIG. 6B, the first field may be carried in the STAInfo field, the STA Control field, or the STA Profile of the basic variant multi-link element.

Optionally, the first field may be referred to as an EMLMR Link Bitmap (EMLMR Link Bitmap) field. Optionally, this may correspond to a case that the first field indicates whether the first link and one or more second links belong to a link set.

Optionally, the first frame may include the first field and the second field.

In some embodiments, the second field may indicate whether the first field (for example, the first field that indicates whether the first link and one or more second links belong to a link set) exists.

For example, the second field may be used with reference to the first field that indicates whether the first link and the one or more second links belong to a link set. Referring to Table 24 (using an example in which Table 24 is used with reference to Table 22), the second field is set to 0, and the first field does not exist. The second field is set to 1. For the definitions of the values of the first field, refer to the foregoing manner 1. Details are not described herein again.

**Table 24**

| Second field | First field | Definition |
|---|---|---|
| 0 | Do not exist | |
| 1 | 1100 | A link 1, a link 2, and a link 3 belong to a same link set. A link 1, a link 4, and a link 5 do not belong to the same link set. |

Correspondingly, if the second field indicates that the first field does not exist, the second field further indicates that the first link does not belong to any link set in the at least one link set. For example, the second field may be used with reference to the first field that indicates whether the first link and the one or more second links belong to a link set. Referring to Table 25 (using an example in which Table 25 is used with reference to Table 22), the second field is set to 0, the first field does not exist, and the first link does not belong to any link. The second field is set to 1. For the definitions of the values of the first field, refer to the foregoing manner 1. Details are not described herein again.

**Table 25**

| Second field | First field | Definition |
|---|---|---|
| 0 | Do not exist | Not belong to any link set |
| 1 | 1100 | A link 1, a link 2, and a link 3 belong to a same link set. A link 1, a link 4, and a link 5 do not belong to the same link set. |

In some embodiments, the second field may be carried in the STA Control field or the STAInfo field of the multi-link element.

Optionally, the second field may be referred to as an EMLMR Link Bitmap Present (EMLMR Link Bitmap Present) field.

With reference to FIG. 6A and FIG. 6B, the second field may be carried in the STA Control field of the basic variant multi-link element.

With reference to FIG. 6A and FIG. 6B, the second field may be carried in the STAInfo field of the basic variant multi-link element.

Optionally, when the second field is combined with the first field, the EMLMR Link Bitmap Present field is carried in the STA Control field, and the EMLMR Link Bitmap field may be carried in the STA Info field. Alternatively, the EMLMR Link Bitmap Present field is carried in the STA Control field, and the EMLMR Link Bitmap field may be carried in the STA Control field. Alternatively, the EMLMR Link Bitmap Present field is carried in the STA Control field, and the EMLMR Link Bitmap field may be carried in the STA Profile field.

Alternatively, optionally, when the second field is combined with the first field, the EMLMR Link Bitmap Present field is carried in the STA Info field, and the EMLMR Link Bitmap field may be carried in the STA Info field. Alternatively, the EMLMR Link Bitmap Present field is carried in the STA Info field, and the EMLMR Link Bitmap field may be carried in the STA Control field. Alternatively, the EMLMR Link Bitmap Present field is carried in the STAInfo field, and the EMLMR Link Bitmap field may be carried in the STA Profile field.

In a possible design manner, the first frame may further include a fourth field, and the fourth field may indicate the length of the first field.

For example, the length of the first field may be determined based on a number of links. For example, if the number of links is 5, it may be determined that the length of the first field is 4 bits. This is not limited in embodiments of this application.

Optionally, the fourth field may be carried in a Per-STA Profile field that is configured for each station and that is of a multi-link element (Multi-Link element).

With reference to FIG. 6A and FIG. 6B, the fourth field may be carried in a Per-STA Profile field of the basic variant multi-link element.

Optionally, the fourth field may be referred to as an EMLMR Link Bitmap Size (EMLMR Link Bitmap Size).

In some embodiments, the first frame may include the first field and the fourth field.

In some embodiments, the first frame may include the first field, the second field, and the fourth field.

Optionally, if the second field indicates that the first field does not exist, the fourth field may not exist. In this way, parsing may be convenient.

It should be noted that when the first MLD does not support an EMLMR operation mode, the first field, the second field, the third field, and the fourth field may all not exist or be set to 0.

S702: The first MLD sends the first frame. Correspondingly, the second MLD receives the first frame.

For a specific implementation of the first frame, refer to S701. Details are not described herein again.

For example, the first frame may be a (re-)association request ((Re-)Association Request) frame. The first MLD may send the first frame to the second MLD in a multi-link (re-)setup (multi-link (Re-)setup) process. Correspondingly, the second MLD receives the first frame from the first MLD.

S703: A second MLD obtains a relationship between a first link and at least one link set based on the first frame.

For example, it is assumed that links between the first MLD and the second MLD include a link 1, a link 2, and a link 3, and a number of link sets is two, for example, the link set 1 and the link set 2. The first frame includes first fields respectively corresponding to the link 1, the link 2, and the link 3, and respectively indicate a relationship between the link 1 and the link set 1 and the link set 2, a relationship between the link 2 and the link set 1 and the link set 2, and a relationship between the link 3 and the link set 1 and the link set 2. Therefore, the second MLD may obtain the relationship between the link 1 and the link set 1 and the link set 2, the relationship between the link 2 and the link set 1 and the link set 2, and the relationship between the link 3 and the link set 1 and the link set 2 based on the first frame. For example, the link 1 belongs to the link set 1, the link 2 belongs to the link set 1 and the link set 2, and the link 3 belongs to the link set 2. In other words, the link set 1 includes the link 1 and the link 2, and the link set 2 includes the link 2 and the link 3.

In this way, that which link/links belongs/belong to which link set/link sets may be obtained, and an EMLMR operation may be successfully performed.

In some embodiments, the second MLD obtains a relationship between the first link and the at least one link set based on the first field included in the first frame.

With reference to FIG. 2 and FIG. 6A and FIG. 6B, n=3 is used as an example, and corresponds to a case that the first field indicates whether the first link belongs to the first link set. It is assumed that the first field in the Per-STA Profile x field (corresponding to the link 1) is 1, the first field in the Per-STA Profile y field (corresponding to the link 2) is 0, and the first field in the Per-STA Profile z field (not shown in FIG. 6A and FIG. 6B) (corresponding to the link 3) is 1. The second MLD may learn that the link 1 belongs to the first link set (for example, the link set 1), the link 2 does not belong to the first link set, the link 3 belongs to the first link set, and the first link set includes the link 1 and the link 2, but does not include the link 3.

With reference to FIG. 2 and FIG. 6A and FIG. 6B, n=3 is used as an example, and corresponds to the foregoing manner 2. It is assumed that the first field occupies 3 bits, the first field in the Per-STA Profile x field (corresponding to the link 1) is 001, the first field in the Per-STA Profile y field (corresponding to the link 2) is 001, the first field in the Per-STA Profile z field (not shown in FIG. 6Aand FIG. 6B) (corresponding to the link 3) is 010, and a number of link sets is 2. The second MLD may learn that the link 1 belongs to the link set 1, the link 2 belongs to the link set 1, and the link 3 belongs to the link set 2. The link set 1 includes the link 1 and the link 2 but does not include the link 3, and the link set 2 includes the link 3 but does not include the link 1 and the link 2.

With reference to FIG. 2 and FIG. 6A and FIG. 6B, n=3 is used as an example, and corresponds to the foregoing manner 4. It is assumed that the first field in the Per-STA Profile x field (corresponding to the link 1) is 01, the first field in the Per-STAProfile y field (corresponding to the link 2) is 10, the first field in the Per-STA Profile z field (not shown in FIG. 6A and FIG. 6B) (corresponding to the link 3) is 0110, and a number of link sets is two. The second MLD may learn that the link 1 belongs to the link set 1, the link 2 belongs to the link set 2, and the link 3 belongs to the link set 1 and the link set 2. The link set 1 includes the link 1 and the link 3, and does not include the link 2. The link set 2 includes the link 2 and the link 3, and does not include the link 1.

With reference to FIG. 2 and FIG. 6A and FIG. 6B, n=3 is used as an example, and corresponds to the foregoing manner 6. Corresponding to the example in Table 6-1, it is assumed that the first field in the Per-STA Profile x field (corresponding to the link 1) is 10, the first field in the Per-STA Profile y field (corresponding to the link 2) is 10, the first field in the Per-STA Profile z field (not shown in FIG. 6A and FIG. 6B) (corresponding to the link 3) is 01, and a number of link sets is two. The second MLD may learn that the link 1 belongs to the link set 1, the link 2 belongs to the link set 1, and the link 3 belongs to the link set 2. The link set 1 includes the link 1 and the link 2 but does not include the link 3, and the link set 2 includes the link 3 but does not include the link 1 and the link 2.

With reference to FIG. 2 and FIG. 6A and FIG. 6B, n=3 is used as an example, and corresponds to the foregoing manner 7. Corresponding to the example in Table 7-1, it is assumed that the first field in the Per-STA Profile x field (corresponding to the link 1) is 01, the first field in the Per-STA Profile y field (corresponding to the link 2) is 10, the first field in the Per-STA Profile z field (not shown in FIG. 6A and FIG. 6B) (corresponding to the link 3) is 11, and a number of link sets is two. The second MLD may learn that the link 1 belongs to the link set 2, the link 2 belongs to the link set 1, and the link 3 belongs to the link set 1 and the link set 2. The link set 1 includes the link 2 and the link 3, and does not include the link 1. The link set 2 includes the link 1 and the link 3, and does not include the link 2.

In this way, the second MLD may obtain a link set to which a link belongs and a link included in the link set, and may successfully perform an EMLMR operation.

It should be noted that in embodiments of this application, the first frame or the first field corresponding to other manners, more or fewer link sets, and more or fewer links are not described in detail.

In some embodiments, the second MLD obtains the relationship between the first link and the at least one link set based on the first field and the second field that are included in the first frame.

For example, the second MLD may determine, based on the second field, whether the first field exists, and if the first field exists, obtain the relationship between the first link and the at least one link set based on the first field. If the first field does not exist, the relationship between the first link and the at least one link set is not indicated. Alternatively, if the first field does not exist, the first link does not belong to any link set.

With reference to FIG. 2 and FIG. 6A and FIG. 6B, n=5 is used as an example, and the second field is used with reference to the first field corresponding to the foregoing manner 6 (corresponding to Table 13). It is assumed that a second field in a Per-STA Profile x field (corresponding to the link 1) is 0, a second field in a Per-STA Profile y field (corresponding to the link 2) is 1, and the first field is 10, a second field in a Per-STA Profile z field (not shown in FIG. 6A and FIG. 6B) (corresponding to the link 3) is 1, and the first field is 01, a second field in a Per-STA Profile k field (not shown in FIG. 6A and FIG. 6B) (corresponding to the link 4) is 1, and the first field is 10, and a second field in a Per-STA Profile t field (not shown in FIG. 6A and FIG. 6B) (corresponding to the link 5) is 1, and the first field is 01, a number of link sets is two. The second MLD may learn that the link 2 belongs to the link set 1, the link 3 belongs to the link set 2, the link 4 belongs to the link set 1, and the link 5 belongs to the link set 2. The link set 1 includes the link 2 and the link 4, but does not include the link 3 and the link 5. The link set 2 includes the link 3 and the link 5, but does not include the link 2 and the link 4.

With reference to FIG. 2 and FIG. 6A and FIG. 6B, n=5 is used as an example, and the second field is used with reference to the first field corresponding to the foregoing manner 6 (corresponding to Table 20-1). It is assumed that a second field in a Per-STA Profile x field (corresponding to the link 1) is 0, a second field in a Per-STA Profile y field (corresponding to the link 2) is 1, and the first field is 10, a second field in a Per-STA Profile z field (not shown in FIG. 6A and FIG. 6B) (corresponding to the link 3) is 1, and the first field is 01, a second field in a Per-STA Profile k field (not shown in FIG. 6A and FIG. 6B) (corresponding to the link 4) is 1, and the first field is 10, and a second field in a Per-STA Profile t field (not shown in FIG. 6A and FIG. 6B) (corresponding to the link 5) is 1, and the first field is 01, a number of link sets is two. The second MLD may learn that the link 1 does not belong to the link 1 and the link 2, the link 2 belongs to the link set 1, the link 3 belongs to the link set 2, the link 4 belongs to the link set 1, and the link 5 belongs to the link set 2. The link set 1 includes the link 2 and the link 4, but does not include the link 1, the link 3, and the link 5. The link set 2 includes the link 3 and the link 5, but does not include the link 1, the link 2, and the link 4.

In this way, the second MLD may obtain a link set to which a link belongs and a link included in the link set, and may successfully perform an EMI,MR operation.

It should be noted that in embodiments of this application, the first frame or the first field corresponding to other manners, more or fewer link sets, and more or fewer links are not described in detail.

In some embodiments, the second MLD obtains the relationship between the first link and the at least one link set based on the first field, the second field, and the third field that are included in the first frame.

For example, the second MLD may determine the length of the first field or the effective length of the first field based on the third field.

With reference to FIG. 2 and FIG. 6A and FIG. 6B, n=3 is used as an example, and corresponds to a case that the first field indicates whether the first link belongs to the first link set. It is assumed that the length of the first field is 8 bits, the third field indicates that a number of link sets is 1, the second field in the Per-STA Profile x field (corresponding to the link 1) is 1, and the first field is 00000001. The second field in the Per-STA Profile y field (corresponding to the link 2) is 1, and the first field is 000000000. The second field in the Per-STA Profile z field (not shown in FIG. 6A and FIG. 6B) (corresponding to the link 3) is 1, and the first field is 00000001.

The second MLD may obtain, based on that the number of link sets is 1, that the effective length of the first field is 1 bit, so that the second MLD may read only a last 1 bit from left to right of the first field, to learn that the link 1 belongs to the first link set (for example, the link set 1), the link 2 does not belong to the first link set, and the link 3 belongs to the first link set. The first link set includes the link 1 and the link 3, but does not include the link 2.

In this way, the second MLD may obtain a link set to which a link belongs and a link included in the link set, and may successfully perform an EMLMR operation. In addition, a delay may be reduced.

It should be noted that in embodiments of this application, the first frame or the first field corresponding to other manners, more or fewer link sets, and more or fewer links are not described in detail.

According to the communication method provided in embodiments of this application, the first MLD generates the first frame including the first field, and sends the first frame to the second MLD. The first field indicates a relationship between the first link and the at least one link set, the first link is any one of the at least one link established by the first MLD and the second MLD, and one link set includes one or more of the at least one link. In this way, the first frame flexibly indicates a relationship between one or more links and one or more link sets, so that the second MLD may determine, based on the first frame, a link set to which the first link belongs and a link included in the link set, and may obtain which link set/link sets to which which link/links belongs/belong, thereby successfully performing an EMI,MR operation.

In this application, unless otherwise specified, for same or similar parts of the embodiments, refer to each other. In embodiments of this application and the implementations/implementation methods in embodiments, unless otherwise specified or a logical conflict occurs, terms and/or descriptions are consistent and may be mutually referenced between different embodiments and between the implementations/implementation methods in embodiments. Technical features in the different embodiments and the implementations/implementation methods in embodiments may be combined to form a new embodiment, implementation, or implementation method based on an internal logical relationship thereof. The following implementations of this application are not intended to limit the protection scope of this application.

The foregoing describes in detail the communication method provided in embodiments of this application with reference to FIG. 7 to FIG. 16. The following describes in detail the communication apparatus provided in embodiments of this application with reference to FIG. 17 and FIG. 18.

FIG. 17 is a schematic diagram of a structure of a communication apparatus that may be configured to perform a communication method according to an embodiment of this application. The communication apparatus 1700 may be a first MLD or a second MLD, or may be a chip or another component having a corresponding function that is applied to the first MLD or the second MLD. As shown in FIG. 17, the communication apparatus 1700 may include a processor 1701 and a transceiver 1703, and may further include a memory 1702. The processor 1701 is coupled to the memory 1702 and the transceiver 1703, for example, may be connected through a communication bus, or the processor 1701 may be used independently.

The following specifically describes each component of the communication apparatus 1700 with reference to FIG. 17.

The processor 1701 is a control center of the communication apparatus 1700, and may be one processor or may be a collective name of a plurality of processing elements. For example, the processor 1701 is one or more central processing units (central processing units, CPUs), or may be an application-specific integrated circuit (application-specific integrated circuit, ASIC), or is configured as one or more integrated circuits for implementing embodiments of this application, for example, one or more microprocessors (digital signal processors, DSPs) or one or more field programmable gate arrays (field programmable gate arrays, FPGAs).

The processor 1701 may perform various functions of the communication apparatus 1700 by running or executing a software program stored in the memory 1702 and invoking data stored in the memory 1702.

During specific implementation, in an embodiment, the processor 1701 may include one or more CPUs, for example, a CPU 0 and a CPU 1 shown in FIG. 17.

In a specific implementation, in an embodiment, the communication apparatus 1700 may alternatively include a plurality of processors, for example, the processor 1701 and a processor 1704 shown in FIG. 17. Each of the processors may be a single-core processor (single-CPU), or may be a multi-core processor (multi-CPU). The processor herein may be one or more communication devices, circuits, and/or processing cores configured to process data (for example, computer program instructions).

The memory 1702 may be a read-only memory (read-only memory, ROM) or another type of static storage communication device capable of storing static information and instructions, or a random access memory (random access memory, RAM) or another type of dynamic storage communication device capable of storing information and instructions; or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage communication device, or any other medium capable of carrying or storing expected program code in a form of an instruction or a data structure and accessible by a computer. However, this is not limited thereto. The memory 1702 may be integrated with the processor 1701, or may exist independently, and is coupled to the processor 1701 through an input/output port (not shown in FIG. 17) of the communication apparatus 1700. This is not specifically limited in embodiments of this application.

For example, the input port may be configured to implement a receiving function performed by the first MLD or the second MLD in any one of the foregoing method embodiments, and the output port may be configured to implement a sending function performed by the first MLD or the second MLD in any one of the foregoing method embodiments.

The memory 1702 is configured to store a software program for executing the solutions of this application, and the processor 1701 controls execution of the software program. For the foregoing specific implementation, refer to the following method embodiments. Details are not described herein again.

The transceiver 1703 is configured to communicate with another communication apparatus. For example, when the communication apparatus 1700 is the first MLD, the transceiver 1703 may be configured to communicate with the second MLD. For another example, when the communication apparatus 1700 is the second MLD, the transceiver 1703 may be configured to communicate with the first MLD. In addition, the transceiver 1703 may include a receiver and a transmitter (not separately shown in FIG. 17). The receiver is configured to implement a receiving function, and the transmitter is configured to implement a sending function. The transceiver 1703 may be integrated with the processor 1701, or may exist independently, and is coupled to the processor 1701 through an input/output port (not shown in FIG. 17) of the communication apparatus 1700. This is not specifically limited in embodiments of this application.

It should be noted that the structure of the communication apparatus 1700 shown in FIG. 17 does not constitute a limitation on the communication apparatus. An actual communication apparatus may include more or fewer components than those shown in the figure, or combine some components, or use a different component deployment.

Actions of the first MLD in step S701 and step S702 may be performed by the processor 1701 in the communication apparatus 1700 shown in FIG. 17 by invoking the application program code stored in the memory 1702, to indicate the first MLD to perform the actions.

Actions of the second MLD in step S703 may be performed by the processor 1701 in the communication apparatus 1700 shown in FIG. 17 by invoking the application program code stored in the memory 1702, to indicate the second MLD to perform. This is not limited in this embodiment.

When the communication apparatus is the first MLD, the communication apparatus 1700 may perform any one or more possible design manners of the first MLD in the foregoing method embodiments; and when the communication apparatus is the second MLD, the communication apparatus 1700 may perform any one or more possible design manners of the second MLD in the foregoing method embodiments.

It should be noted that all related content of the steps in the foregoing method embodiments may be cited in function description of corresponding functional modules. Details are not described herein again.

FIG. 18 is a schematic diagram of a structure of another communication apparatus according to an embodiment of this application. For ease of description, FIG. 18 shows only main components of the communication apparatus.

The communication apparatus 1800 includes a transceiver module 1801 and a processing module 1802. The communication apparatus 1800 may be a first MLD or a second MLD in the foregoing method embodiments. The transceiver module 1801 may also be referred to as a transceiver unit, and is configured to implement a receiving and sending function performed by the first MLD or the second MLD in any one of the foregoing method embodiments.

It should be noted that the transceiver module 1801 may include a receiving module and a sending module (not shown in FIG. 18). The receiving module is configured to receive data and/or signaling from another device; and the sending module is configured to send data and/or signaling to the another device. A specific implementation of the transceiver module is not specifically limited in this application. The transceiver module may include a transceiver circuit, a transceiver machine, a transceiver, or a communication interface.

The processing module 1802 may be configured to implement a processing function performed by the first MLD or the second MLD in any one of the foregoing method embodiments. The processing module 1802 may be a processor.

In this embodiment, the communication apparatus 1800 is presented in a form of functional modules obtained through integration. The module herein may be an ASIC, a circuit, a processor that executes one or more software or firmware programs, a memory, an integrated logic circuit, and/or another component capable of providing the foregoing functions. In a simple embodiment, a person skilled in the art may figure out that the communication apparatus 1800 may be in a form of the communication apparatus 1700 shown in FIG. 17.

For example, the processor 1701 in the communication apparatus 1700 shown in FIG. 17 may invoke the computer executable instructions stored in the memory 1702, to enable the communication method in the foregoing method embodiment to be performed.

Specifically, functions/implementation processes of the transceiver module 1801 and the processing module 1802 in FIG. 18 may be implemented by the processor 1701 in the communication apparatus 1700 shown in FIG. 17 by invoking the computer executable instructions stored in the memory 1702. Alternatively, a function/implementation process of the processing module 1802 in FIG. 18 may be implemented by the processor 1701 in the communication apparatus 1700 shown in FIG. 17 by invoking the computer executable instructions stored in the memory 1702, and a function/implementation process of the transceiver module 1801 in FIG. 18 may be implemented by the transceiver 1703 in the communication apparatus 1700 shown in FIG. 17.

The communication apparatus 1800 provided in this embodiment may perform the foregoing communication method. Therefore, for technical effects that may be achieved by the communication apparatus 1800, refer to the foregoing method embodiments. Details are not described herein again.

In a possible design solution, the communication apparatus 1800 shown in FIG. 18 is applicable to the communication system shown in FIG. 1, and performs a function of the first MLD in the communication method shown in FIG. 7.

The processing module 1802 is configured to generate a first frame. The transceiver module 1801 is configured to send the first frame. The first frame includes a first field, the first field indicates a relationship between a first link and at least one link set, the first link is any one of at least one link established between the first MLD and a second MLD, and one link set includes one or more of the at least one link.

The processing module 1802 may be configured to support the communication apparatus in performing processing actions in the foregoing method embodiments. Specifically, the processing module 1802 may perform processing actions performed by the first MLD in FIG. 7. For example, the first MLD is configured to support the first MLD in performing S701 to generate the first frame, and/or any one or more other possible design manners of the technology described in this specification.

The transceiver module 1801 is configured to support communication between the first MLD and another communication apparatus, and may specifically perform a sending and/or receiving action performed by the first MLD in FIG. 7. For example, the first MLD is supported in performing an operation of sending the first frame in S702, and/or any one or more other possible design manners of the technology described in this specification.

It should be noted that all related content of the steps in the foregoing method embodiments may be cited in function description of corresponding functional modules. Details are not described herein again.

Optionally, the communication apparatus 1800 may further include a storage module (not shown in FIG. 18). The storage module stores a program or instructions. When the processing module 1802 executes the program or the instructions, the communication apparatus 1800 may perform a function of the first MLD in the communication method shown in FIG. 7.

It should be noted that the communication apparatus 1800 may be the first MLD, or may be a chip (system) or another component or component that may be disposed in the first MLD. This is not limited in this application.

In addition, for a technical effect of the communication apparatus 1800, refer to the technical effect of the communication method shown in FIG. 7. Details are not described herein again.

In another possible design solution, the communication apparatus 1800 shown in FIG. 18 is applicable to the communication system shown in FIG. 1, and performs a function of the second MLD in the communication method shown in FIG. 7.

The transceiver module 1801 is configured to receive a first frame. The processing module 1802 is configured to obtain a relationship between a first link and at least one link set based on the first frame. The first frame includes a first field, the first field indicates a relationship between a first link and at least one link set, the first link is any one of at least one link established between a first MLD and the second MLD, and one link set includes one or more of the at least one link.

The processing module 1802 may be configured to support the communication apparatus in performing processing actions in the foregoing method embodiments. Specifically, the processing module 1802 may perform processing actions performed by the second MLD in FIG. 7. For example, the processing module 1802 is configured to support the second MLD in performing an operation of obtaining the relationship between the first link and the at least one link set based on the first frame in S703, and/or any one or more other possible design manners of the technology described in this specification.

The transceiver module 1801 is configured to support communication between the second MLD and another communication apparatus, and may specifically perform a sending and/or receiving action performed by the second MLD in FIG. 7. For example, the second MLD is supported in performing an operation of receiving the first frame in S702, and/or any one or more other possible designs of the technology described in this specification.

It should be noted that all related content of the steps in the foregoing method embodiments may be cited in function description of corresponding functional modules. Details are not described herein again. Optionally, the communication apparatus 1800 may further include a storage module (not shown in FIG. 18). The storage module stores a program or instructions. When the processing module 1802 executes the program or the instructions, the communication apparatus 1800 may perform a function of the second MLD in the communication method shown in FIG. 7.

It should be noted that the communication apparatus 1800 may be the second MLD, or may be a chip (system) or another component or component that may be disposed in the second MLD. This is not limited in this application.

In addition, for a technical effect of the communication apparatus 1800, refer to the technical effect of the communication method shown in FIG. 7. Details are not described herein again.

Embodiments of this application provide a communication system. The communication system includes a first MLD and a second MLD. The first MLD is configured to perform an action of the first MLD in the foregoing method embodiments. For a specific execution method and process, refer to the foregoing method embodiments. Details are not described herein again.

The second MLD is configured to perform an action of the second MLD in the foregoing method embodiments. For a specific execution method and process, refer to the foregoing method embodiments. Details are not described herein again.

Embodiments of this application provide a chip system. The chip system includes a logic circuit and an input/output port. The logic circuit may be configured to implement a processing function related to the communication method provided in embodiments of this application, and the input/output port may be configured to perform a receiving and sending function related to the communication method provided in embodiments of this application.

For example, the input port may be configured to implement a receiving function in the communication method provided in embodiments of this application, and the output port may be configured to implement a sending function in the communication method provided in embodiments of this application.

For example, the processor in the communication apparatus 1700 may be configured to perform, for example, but not limited to, baseband-related processing, and the transceiver in the communication apparatus 1700 may be configured to perform, for example, but not limited to, radio frequency receiving and sending. The foregoing components may be separately disposed on chips that are independent of each other, or at least some or all of the components may be disposed on a same chip. For example, the processor may be further divided into an analog baseband processor and a digital baseband processor. The analog baseband processor and the transceiver may be integrated on a same chip, and the digital baseband processor may be disposed on an independent chip. With continuous development of integrated circuit technologies, more and more components may be integrated on a same chip. For example, the digital baseband processor may be integrated on a same chip with a plurality of application processors (for example, but not limited to a geometric processor and a multimedia processor). The chip may be referred to as a system on chip (system on chip). Whether components are independently disposed on different chips or are integrated and disposed on one or more chips usually depends on specific requirements of a product design. Specific implementation forms of the foregoing components are not limited in embodiments of the present invention.

In a possible design, the chip system further includes a memory, and the memory is configured to store program instructions and data for implementing a function related to the communication method provided in embodiments of this application.

The chip system may include a chip, or may include a chip and another discrete component.

Embodiments of this application provide a computer-readable storage medium. The computer-readable storage medium includes a computer program or instructions. When the computer program or the instructions runs/run on a computer, the communication method provided in embodiments of this application is performed.

Embodiments of this application provide a computer program product. The computer program product includes a computer program or instructions. When the computer program or the instructions runs/run on a computer, the communication method provided in embodiments of this application is performed.

It should be understood that, the processor in embodiments of this application may be a central processing unit (central processing unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA), or another programmable logic device, discrete gate or transistor logic device, discrete hardware component, or the like. The general-purpose processor may be a microprocessor, or the processor may be any conventional processor or the like.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through an example rather than a limitative description, random access memories (random access memory, RAM) in many forms may be used, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented using software, hardware (for example, circuit), firmware, or any combination thereof. When software is used to implement embodiments, the foregoing embodiments may be implemented completely or partially in a form of a computer program product. The computer program product includes one or more computer instructions or computer programs. When the program instructions or the computer programs are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, and microwave, or the like) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association relationship between associated objects and indicates that three relationships may exist. For example, A and/or B may represent the following three cases: Only A exists, both A and B exist, and only B exists. A and B may be singular or plural. In addition, the character "/" in this specification usually indicates an "or" relationship between the associated objects, but may also indicate an "and/or" relationship. For details, refer to the context for understanding.

In this application, at least one means one or more, and a plurality of means two or more. At least one of the following items (pieces) or a similar expression thereof refers to any combination of these items, including any combination of singular items (pieces) or plural items (pieces). For example, at least one of a, b, or c may indicate: a, b, c, a-b, a-c, b-c, or a-b-c, where a, b, and c may be singular or plural.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The computer software product is stored in a storage medium, and includes several instructions for instructing a computer device (which may be a personal computer, a server, or a network device) to perform all or some of the steps of the methods described in the embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
generating, by a first multi-link device MLD, a first frame, wherein the first frame comprises a first field, the first field indicates a relationship between a first link and at least one link set, the first link is any one of at least one link established between the first MLD and a second MLD, and one link set comprises one or more of the at least one link; and
sending the first frame.

2. The communication method according to claim 1, wherein the first field indicates whether the first link belongs to a first link set, and the at least one link set is the first link set.

3. The communication method according to claim 1, wherein the first field indicates a link set to which the first link belongs.

4. The method according to claim 3, wherein the first field is a bitmap.

5. The communication method according to claim 3 or 4, wherein the first frame further comprises a second field, and the second field indicates whether the first field exists.

6. The communication method according to claim 5, wherein the second field is carried in a Per-STA Profile field that is configured for each station and that is of a multi-link element Multi-Link element.

7. The communication method according to any one of claims 1 to 6, wherein the first frame further comprises a third field, and the third field indicates a number of the at least one link set.

8. The communication method according to claim 7, wherein the third field is carried in a common information Common Info field of the multi-link element Multi-Link element.

9. The communication method according to any one of claims 2 to 8, wherein the first field is carried in the Per-STA Profile field that is configured for each station and that is of the multi-link element Multi-Link element.

10. A communication method, comprising:
receiving, by a second multi-link device MLD, a first frame, wherein the first frame comprises a first field, the first field indicates a relationship between a first link and at least one link set, the first link is any one of at least one link established between a first MLD and the second MLD, and one link set comprises one or more of the at least one link; and
obtaining a relationship between the first link and the at least one link set based on the first frame.

11. The communication method according to claim 10, wherein the first field indicates whether the first link belongs to a first link set, and the at least one link set is the first link set.

12. The communication method according to claim 10, wherein the first field indicates a link set to which the first link belongs.

13. The method according to claim 12, wherein the first field is a bitmap.

14. The communication method according to claim 12 or 13, wherein the first frame further comprises a second field, and the second field indicates whether the first field exists.

15. The communication method according to claim 14, wherein the second field is carried in a Per-STA Profile field that is configured for each station and that is of a multi-link element Multi-Link element.

16. The communication method according to any one of claims 10 to 15, wherein the first frame further comprises a third field, and the third field indicates a number of the at least one link set.

17. The communication method according to claim 16, wherein the third field is carried in a common information Common Info field of the multi-link element Multi-Link element.

18. The communication method according to any one of claims 11 to 17, wherein the first field is carried in the Per-STA Profile field that is configured for each station and that is of the multi-link element Multi-Link element.

19. A communication apparatus, comprising:
a processing unit, configured to generate, by a first multi-link device MLD, a first frame, wherein the first frame comprises a first field, the first field indicates a relationship between a first link and at least one link set, the first link is any one of at least one link established between the first MLD and a second MLD, and one link set comprises one or more of the at least one link; and
a transceiver unit, configured to send the first frame.

20. The communication apparatus according to claim 19, wherein the first field indicates whether the first link belongs to a first link set, and the at least one link set is the first link set.

21. The communication apparatus according to claim 19, wherein the first field indicates a link set to which the first link belongs.

22. The communication apparatus according to claim 21, wherein the first field is a bitmap.

23. The communication apparatus according to claim 21 or 22, wherein the first frame further comprises a second field, and the second field indicates whether the first field exists.

24. The communication apparatus according to claim 23, wherein the second field is carried in a Per-STA Profile field that is configured for each station and that is of a multi-link element Multi-Link element.

25. The communication apparatus according to any one of claims 19 to 24, wherein the first frame further comprises a third field, and the third field indicates a number of the at least one link set.

26. The communication apparatus according to claim 25, wherein the third field is carried in a common information Common Info field of the multi-link element Multi-Link element.

27. The communication apparatus according to any one of claims 20 to 26, wherein the first field is carried in the Per-STA Profile field that is configured for each station and that is of the multi-link element Multi-Link element.

28. A communication apparatus, comprising:
a transceiver unit, configured to receive, by a second multi-link device MLD, a first frame, wherein the first frame comprises a first field, the first field indicates a relationship between a first link and at least one link set, the first link is any one of at least one link established between a first MLD and the second MLD, and one link set comprises one or more of the at least one link; and
a processing unit, configured to obtain a relationship between the first link and the at least one link set based on the first frame.

29. The communication apparatus according to claim 28, wherein the first field indicates whether the first link belongs to a first link set, and the at least one link set is the first link set.

30. The communication apparatus according to claim 28, wherein the first field indicates a link set to which the first link belongs.

31. The communication apparatus according to claim 30, wherein the first field is a bitmap.

32. The communication apparatus according to claim 30 or 31, wherein the first frame further comprises a second field, and the second field indicates whether the first field exists.

33. The communication apparatus according to claim 32, wherein the second field is carried in a Per-STA Profile field that is configured for each station and that is of a multi-link element Multi-Link element.

34. The communication apparatus according to any one of claims 28 to 33, wherein the first frame further comprises a third field, and the third field indicates a number of the at least one link set.

35. The communication apparatus according to claim 34, wherein the third field is carried in a common information Common Info field of the multi-link element Multi-Link element.

36. The communication apparatus according to any one of claims 29 to 35, wherein the first field is carried in the Per-STA Profile field that is configured for each station and that is of the multi-link element Multi-Link element.

37. A communication apparatus, wherein the communication apparatus comprises a processor, and the processor is coupled to a memory;
the memory is configured to store a computer program; and
the processor is configured to execute the computer program stored in the memory, to enable the communication method according to any one of claims 1 to 18 to be performed.

38. A computer-readable storage medium, wherein the computer-readable storage medium comprises a computer program or instructions; and when the computer program or the instructions runs/run on a computer, the communication method according to any one of claims 1 to 18 is performed.

39. A computer program product, wherein the computer program product comprises a computer program or instructions; and when the computer program or the instructions runs/run on a computer, the communication method according to any one of claims 1 to 18 is performed.
